# EUROPÄISCHE PATENTSCHRIFT

(11) **EP 3 664 977 B1**
(45) Veröffentlichungstag und Bekanntmachung des Hinweises auf die Patenterteilung: **28.09.2022**
(21) Anmeldenummer: 18746176.9
(22) Anmeldetag: 25.07.2018
(51) Int. Cl.: B23D 51/02, B26B 29/06, B23D 59/00

(54) **FÜHRUNGSSYSTEM**
GUIDE SYSTEM
SYSTÈME DE GUIDAGE

(30) Priorität: 11.08.2017 DE 102017118331
(43) Veröffentlichungstag der Anmeldung: 17.06.2020
(73) Patentinhaber: Festool GmbH, 73240 Wendlingen (DE)
(72) Erfinder: KOVÁCS, Ondrej, 47001 Ceská Lipa (CZ); ZVÀNOVEC, Václav, 47124 Mimon (CZ)
(74) Vertreter: Patentanwälte Bregenzer und Reule Partnerschaftsgesellschaft mbB
(86) Internationale Anmeldenummer: PCT/EP2018/070209
(87) Internationale Veröffentlichungsnummer: WO 2019/029996

(56) Entgegenhaltungen:
- EP-A1- 2 974 839
- DE-A1- 3 716 939
- DE-A1- 3 842 963
- FR-A1- 2 640 542
- GB-A- 2 315 457
- US-A- 3 994 065

## Beschreibung

Die Erfindung betrifft ein Führungssystem umfassend eine auf einen Untergrund auflegbare Führungsschiene und einen zum Führen einer Hand-Werkzeugmaschine geeigneten Führungsschlitten gemäß Oberbegriff des Anspruches 1.

Derartige Führungssysteme sind beispielsweise im Zusammenhang mit Kreissägen und Stichsägen üblich. Die Führungsschiene wird auf das Werkstück aufgelegt und die Hand-Werkzeugmaschine anhand ihres Führungsschlittens an der Führungsschiene entlanggeführt, um geradlinige, ggf. bogenförmige Schnitte in das Werkstück einzubringen. Wenn das Werkstück mechanisch entsprechend belastbar ist, d.h. beim Auflegen der Führungsschiene wenig oder nicht nachgibt, ist diese Vorgehensweise durchaus praktikabel. Bei weicheren Werkstücken, beispielsweise Dämmstoffmatten oder dergleichen, ist diese Handhabung aber nicht praktikabel, weil das Werkstück unter der Last der Führungsschiene und des ggf. Druck auf die Hand-Werkzeugmaschine und die Führungsschiene ausübenden Nutzers nachgeben würde.

Aus DE 38 42 963 A1 geht ein Werktisch für eine Hand-Werkzeugmaschine hervor, der einen Rahmen aufweist, an dem Schlitten angeordnet sind, in denen eine Hand-Werkzeugmaschine aufnehmbar ist.

Es ist daher die Aufgabe der vorliegenden Erfindung, ein verbessertes Führungssystem bereitzustellen.

Zur Lösung der Aufgabe ist bei einem Führungssystem der eingangs genannten Art vorgesehen, dass das Führungssystem eine mit dem Führungsschlitten verbundene oder anhand von Fixiermitteln lösbar verbindbare Stützeinrichtung zum Stützen des Antriebsaggregats der Hand-Werkzeugmaschine in einem zum Auflegen des Werkstücks auf die Führungsschiene vorgesehenen Abstand zu dem Führungsschlitten aufweist, sodass das Schneidwerkzeug in dem Abstand zwischen der Führungsschiene und dem Antriebsaggregat zum Einschneiden in das auf der Führungsschiene aufliegende Werkstück angeordnet ist.

Es ist ein Grundgedanke der vorliegenden Erfindung, dass durch die Stützeinrichtung ein Abstand zwischen Führungsschlitten und Antriebsaggregat der Hand-Werkzeugmaschine geschaffen ist, so dass das Schneidwerkzeug in dem Abstand zwischen der Führungsschiene und dem Antriebsaggregat in das Werkstück einschneiden kann. Das Antriebsaggregat ist auf dem Führungsschlitten abgestützt. Die Führungsschiene kann unterhalb des Werkstücks auf einem Untergrund aufliegen, insbesondere auf einem festen Untergrund. Das Werkstück wird auf die Führungsschiene aufgelegt. Oberhalb von Führungsschiene und Werkstück ist das Antriebsaggregat angeordnet und kann vom Bediener bequem ergriffen werden, um in das Werkstück einzuschneiden.

Die Stützeinrichtung kann beispielsweise einen Bestandteil des Schneidwerkzeugs bilden. Insbesondere ist es möglich, dass ein Schneidkörper des Schneidwerkzeugs einen Bestandteil der Stützeinrichtung bildet oder an der Stützeinrichtung geführt ist.

Das Schneidwerkzeug kann also an der Stützeinrichtung geführt sein oder anders formuliert die Stützeinrichtung eine Führung für das Schneidwerkzeug bilden. Es ist aber durchaus auch möglich, dass das Schneidwerkzeug abseits der Stützeinrichtung angeordnet ist.

Die Stützeinrichtung weist zweckmäßigerweise ein eine Längsgestalt aufweisendes Stützteil zum Abstützen des Antriebsaggregats der Hand-Werkzeugmaschine an dem Führungsschlitten auf oder ist mit dem Antriebsaggregat verbunden. Ein anderer, dem ersten Längsendbereich entgegengesetzter zweiter Längsendbereich des Stützteils ist mit dem Führungsschlitten verbunden, insbesondere fest verbunden, oder kann anhand von Fixiermitteln lösbar mit dem Stützteil verbunden werden. Mindestens ein Schneidkörper des Schneidwerkzeugs, beispielsweise ein Klingenkörper, ist neben dem Stützteil oder an dem Stützteil angeordnet. Der Schneidkörper kann an dem Stützteil geführt sein.

Zwischen dem Stützteil und dem Schneidwerkzeug, insbesondere dem Klingenkörper, ist vorteilhaft in Arbeitsrichtung der Hand-Werkzeugmaschine kein Zwischenraum vorhanden.

Vorzugsweise ist vorgesehen, dass das Antriebsaggregat mit einem einzigen Stützteil mit dem Führungsschlitten verbunden oder verbindbar ist.

Das Stützteil und das Schneidwerkzeug sind vorteilhaft in Arbeitsrichtung der Hand-Werkzeugmaschine hintereinander angeordnet und/oder fluchten vorzugsweise Arbeitsrichtung miteinander.

Aus der obigen Ausführungsform wird deutlich, dass das Stützteil beispielsweise einen Bestandteil der Hand-Werkzeugmaschine bilden kann, beispielsweise fest mit dem Antriebsaggregat verbunden sein kann. Es ist aber auch möglich, dass das Stützteil einen Bestandteil des Führungsschlittens bildet.

Weiterhin kann der Schneidkörper am Schneidkörper des Schneidwerkzeugs neben dem Stützteil, beispielsweise mit einem Abstand dazu, angeordnet sein. Es ist aber auch möglich, dass der Schneidkörper des Schneidwerkzeugs am Stützteil angeordnet ist, wobei er durch das Stützteil geführt sein kann oder auch nicht.

Das Stützteil ist vorzugsweise sehr schmal, so dass es den Einschnitt in das Werkstück nicht oder nur unwesentlich behindert. Das Stützteil kann beispielsweise stangenartig oder blattartig sein. Es ist beispielsweise auch möglich, dass das Stützteil einen Bestandteil einer Anordnung von zwei oder weiteren Stützteilen bildet. So kann der Begriff "das Stützteil" auch für "mindestens ein Stützteil" stehen. Dabei sind Kombinationen möglich, d.h. dass beispielsweise ein Stützteil stangenartig ist, das andere blattartig. Eine Querbreite des Stützteils quer zu der Arbeitsrichtung oder quer zu einer Vorschubrichtung des Schneidwerkzeugs durch das Werkstück beträgt maximal das 2-fache, insbesondere maximal das 1,5-fache, einer Querbreite des Schneidkörpers. Selbstverständlich ist es auch möglich, dass das Stützteil nicht breiter als der Schneidkörper ist oder nur beispielsweise 10% oder 20% breiter als der Schneidkörper ist. Auch wenn das Werkstück nachgiebig ist, insbesondere ein Dämmstoffmaterial ist, wird dadurch der Vorschub des Schneidwerkzeugs in das Werkstück hinein durch das Stützteil nicht oder nur unwesentlich behindert.

Die Fixiermittel zur lösbaren Verbindung der Stützeinrichtung mit dem Führungsschlitten können unterschiedliche Komponenten enthalten, einzeln und in Kombination miteinander, nämlich beispielsweise eine Hakenanordnung, eine Riegelanordnung, eine Klemmanordnung, einen Kniehebel oder dergleichen.

An dem Führungsschlitten ist zweckmäßigerweise eine Steckaufnahme zum Einstecken der Stützeinrichtung, beispielsweise des Stützteils, vorgesehen.

Eine bevorzugte Ausführungsform der Fixiermittel sieht eine Kombination aus Hakenanordnung und Riegelanordnung und/oder Klemmanordnung vor. Beispielsweise kann ein Längsendbereich des Stützteils oder der Stützeinrichtung in die vorgenannte Steckaufnahme des Führungsschlittens eingesteckt und eingehakt werden. Bevorzugt ist ein Haken an der Stützeinrichtung vorgesehen, der in eine Hakenaufnahme des Führungsschlittens einhakbar ist. Quer zu der Einhakrichtung Des Haken oder Hakenvorsprungs in die Hakenaufnahme ist zweckmäßigerweise eine Klemmeinrichtung oder Klemmanordnung der Fixiermittel wirksam. Die Klemmanordnung umfasst beispielsweise ein Klemmteil, welches quer zur Einhakrichtung oder Einhakachse des Stützteils oder der Stützeinrichtung in die Hakenaufnahme des Führungsschlittens eine Klemmkraft auf die Stützeinrichtung oder das Stützteil ausüben kann.

Bevorzugt ist es, wenn ein Klemmkörper, beispielsweise ein Bolzenelement, ein Zugstab oder dergleichen, als ein Riegelelement ausgestaltet ist. Der Klemmkörper durchsetzt eine Verriegelungsaufnahme der Stützeinrichtung, beispielsweise des Stützteils. Die Verriegelungsaufnahme kann allseitig geschlossen sein, also als eine Durchtrittsöffnung für den Klemmkörper ausgestaltet sein. Die Verriegelungsaufnahme kann aber auch seitlich offen sein, so dass der Klemmkörper seitlich in die Verriegelungsaufnahme einführbar ist bzw. die Verriegelungsaufnahme beispielsweise auf den Klemmkörper aufsetzbar ist

Eine Kombination mit den vorgenannten Maßnahmen ist ohne weiteres zweckmäßig. So kann beispielsweise die Verhakung mit einer Verriegelung und/oder Verklemmung kombiniert sein. So ist beispielsweise die Verriegelungsaufnahme neben dem Hakenvorsprung oder der Hakenaufnahme der Stützeinrichtung angeordnet. Beispielsweise kann vorgesehen sein, dass die Stützeinrichtung und der Führungsschlitten eine Kombination aus Haken und Hakenvorsprung aufweisen, die neben einer Anordnung aus Verriegelungsaufnahme und Verriegelungskörper angeordnet sind. Wenn der Hakenvorsprung in die Hakenaufnahme eingeführt ist, greift der Verriegelungskörper in die Verriegelungsaufnahme ein oder kann in Eingriff mit der Verriegelungsaufnahme gebracht werden.

Ebenso ist eine Kombination aus Verhakung und Verklemmung möglich, auch in zusätzlicher Kombination mit der Verriegelung. So kann beispielsweise eine Hakenanordnung mit Hakenaufnahme und Hakenvorsprung als Stützeinrichtung und Führungsschlitten vorgesehen sein, die in Eingriff bringbar sind und anschließend durch eine Verklemmung fixierbar sind. Die Verklemmung weist beispielsweise einen Klemmkörper auf, der am Führungsschlitten beweglich zwischen einer Lösestellung und einer die Stützeinrichtung mit dem Führungsschlitten verklemmenden Klemmstellung gelagert ist.

Bevorzugt ist eine Betätigungseinrichtung für die Klemmeinrichtung anhand eines Hebels, insbesondere eines Kniehebels oder Klemmhebels. So kann beispielsweise der vorgenannte Klemmkörper, insbesondere ein Zuganker, anhand der Kniehebelanordnung zwischen der Lösestellung und der Klemmstellung bewegt werden. Wie gesagt kann der Zuganker gleichzeitig auch ein Verriegelungskörper für die Stützeinrichtung am Führungsschlitten bilden.

Die Stützeinrichtung, insbesondere eine Stützteil derselben, kann eine wandartige oder blattartige Gestalt aufweisen. Beispielsweise kann das Stützteil in der Art eines Schwerts ausgestaltet sein.

Der Führungsschlitten weist eine in Gebrauchslage von der Führungsschiene abgewandte Oberseitenfläche auf. Die Oberseitenfläche ist zweckmäßigerweise als eine Gleitfläche ausgestaltet, die an einem Werkstück entlanggleiten kann, wenn der Führungsschlitten unter dem Werkstück entlang bewegt wird.

An der Oberseitenfläche des Führungsschlittens ist zweckmäßigerweise eine Vertiefung vorgesehen, in die der Schneidkörper oder die Schneidkörper des Schneidwerkzeugs eingreifen können. Es ist aber auch möglich, dass sich der mindestens eine Schneidkörper nur bis zur Oberseitenfläche erstreckt und nicht in den Führungsschlitten eingreift. Beide Maßnahmen können dazu beitragen, dass die Schneidfunktion sozusagen bis zur Oberseite des Führungsschlittens gewährleistet ist, d.h. dass das Werkstück ohne weiteres vollständig durchschnitten werde kann.

Der Führungsschlitten weist zweckmäßigerweise eine Rollenanordnung zum Rollen auf der Führungsschiene und/oder auf dem Untergrund auf. Mithin ist es also möglich, dass der Führungsschlitten anhand der Rollen unmittelbar auf einem Untergrund entlang gleitet. Insbesondere dann, wenn keine geradlinigen, sondern freie, insbesondere bogenförmige, Schnitte notwendig sind, kann der Führungsschlitten damit auf dem Untergrund entlang rollen.

Die Rollenanordnung bzw. die Rollen sind beispielsweise harte Rollen, was eine optimale Führungsqualität an der Führungsschiene gewährleistet. Es ist aber auch möglich, dass die Rollenanordnung eine oder mehrere relativ weiche Rollflächen aufweisen, beispielsweise aus einem Elastomer, Gummi oder dergleichen, so dass der Führungsschlitten leichter auf dem Untergrund rollbar ist. An dieser Stelle sei erwähnt, dass das Führungssystem durchaus auch zwei verschiedenartig ausgestaltete Führungsschlitten aufweisen kann, nämlich einen Führungsschlitten zum Rollen oder Gleiten entlang der Führungsschiene, während ein anderer Führungsschlitten beispielsweise mit einer Rollenanordnung auf dem Untergrund rollen kann und dementsprechend weichere oder leichter auf dem Untergrund rollbare Rollen aufweist. Insbesondere zum Rollen auf einem freien Untergrund abseits der Führungsschiene ist es auch vorteilhaft, wenn die Rollen verhältnismäßig breit sind. Selbstverständlich haben die Rollen vorteilhaft einen Durchmesser, dass sie nicht über die Oberseitenfläche oder maximal 10% über die Oberseitenfläche des Führungsschlittens nach oben zum Werkstück hin vorstehen, so dass die Rollen eine Fortbewegung des Führungsschlittens unterhalb des Werkstücks nicht behindern. Es ist insbesondere vorteilhaft, wenn die Rollen nicht vor die Oberseite oder Oberseitenfläche des Führungsschlittens, die dem Werkstück in Gebrauchslage zugewandt ist, vorstehen.

Die mindestens eine Führungskontur der Führungsschiene verläuft entlang ihrer Längserstreckung. Die Führungskontur kann bezüglich der Längserstreckung Unterbrechungen haben.

Der Führungsschlitten weist zweckmäßigerweise eine Führungsgegenkontur, beispielsweise eine Führungsnut, einen Führungsvorsprung, einen Kulissenfolger oder dergleichen, zum Führen an der Führungskontur der Führungsschiene auf. Die mindestens eine Führungsgegenkontur des Führungsschlittens kann in Bezug auf seine Längsrichtung oder in Bezug auf die Arbeitsrichtung Unterbrechungen aufweisen. So kann beispielsweise eine in Arbeitsrichtung vordere Stirnseitenwand und eine in Arbeitsrichtung hintere Stirnseitenwand eines Schlittengehäuses jeweils eine Führungsgegenkontur zum Eingriff einer sich in der Längserstreckung der Führungsschiene erstreckenden Führungskontur, insbesondere Führungsrippe, der Führungsschiene aufweisen.

Die Führungsgegenkontur des Führungsschlittens kann beispielsweise durch eine oder mehrere parallel zur Arbeitsrichtung oder in Längsrichtung des Führungsschlittens verlaufende Führungsnuten oder Führungsrippen gebildet sein.

Es ist auch möglich, dass eine oder mehrere Rollen des Führungsschlittens zum Rollen an der Führungsschiene als eine Führungsgegenkontur des Führungsschlittens dienen. Der Führungsschlitten kann also als Führungsgegenkontur auch oder ausschließlich die Rollenanordnung aufweisen.

Selbstverständlich kann die Führungsschiene mehrere Führungskonturen, beispielsweise Führungsrippen oder Führungsnuten aufweisen, die parallel zur Längserstreckung der Führungsschiene nebeneinander angeordnet sind. Dementsprechend ist es auch vorteilhaft, wenn der Führungsschlitten dann mehrere, parallel nebeneinander angeordnete Führungsgegenkonturen aufweist.

Der Führungsschlitten weist vorteilhaft eine dem Antriebsaggregat der Hand-Werkzeugmaschine zugewandte Oberseite auf, wobei die Oberseite eine Stützfläche und/oder Führungsfläche und/oder Auflagefläche für das Werkstück bildet oder aufweist.

Der Führungsschlitten weist zweckmäßigerweise an seiner in Arbeitsrichtung des Schneidwerkzeugs vorn angeordneten Vorderseite eine Aufgleitschräge oder Aufgleitkontur zum Aufgleiten des Werkstücks auf den Führungsschlitten auf. Es ist weiterhin vorteilhaft, wenn die Aufgleitschräge oder Aufgleitkontur in Arbeitsrichtung vor dem Schneidwerkzeug angeordnet ist und/oder in Arbeitsrichtung sozusagen vorauseilend ist.

Ein weiterer vorteilhafter Aspekt sieht vor, dass das Führungssystem eine Seitenanschlageinrichtung, insbesondere mindestens einen Seitenanschlagkörper, mit einer zur seitlichen Anlage an dem Werkstück vorgesehenen Seitenanschlagfläche, insbesondere einer großen Planfläche, und eine Halteeinrichtung zur Verbindung der Seitenanschlageinrichtung mit der Führungsschiene in mindestens einer Winkelposition relativ zu der Führungsschiene aufweist.

Die Führungsschiene kann zwar ohne weiteres ohne die Seitenanschlageinrichtung genutzt werden. Es ist aber vorteilhaft, wenn die Seitenanschlageinrichtung eine zusätzliche Abstützung des Werkstücks gewährleistet. Beispielsweise kann die Seitenanschlageinrichtung in Arbeitsrichtung vor dem Schneidwerkzeug das Werkstück abstützen. Dabei ist eine rechtwinkelige Abstützung und/oder eine winkelige oder schräge Abstützung bezüglich der Längserstreckung oder Längsrichtung der Führungsschiene möglich.

Die Seitenanschlageinrichtung weist zweckmäßigerweise eine Längsgestalt auf und/oder ist als Führungslineal ausgestaltet.

Die Seitenanschlageinrichtung und/oder die Führungsschiene sind vorzugsweise aus Metall und/oder als Profilkörper ausgestaltet.

An der Seitenanschlageinrichtung und/oder der Halteeinrichtung ist zweckmäßigerweise eine Schneidwerkzeug-Aussparung und/oder eine Führungsschlitten-Aussparung angeordnet. Das Schneidwerkzeug kann in die Schneidwerkzeug-Aussparung und der Führungsschlitten kann in die Führungsschlitten-Aussparung bei einer Bewegung des Führungsschlittens entlang der Längserstreckung der Führungsschiene in Richtung der Seitenanschlagfläche eintauchen. Dabei ist beispielsweise die Führungsschlitten-Aussparung tiefer als die Schneidwerkzeug-Aussparung. Die mindestens eine der vorgenannten Aussparungen ist beispielsweise bogenförmig oder ringförmig, so dass die jeweilige Aussparung in unterschiedlichen Winkelstellungen der Seitenanschlageinrichtung bezüglich der Führungsschiene nutzbar ist.

Durch die Aussparung(en) ist es möglich, dass das Schneidwerkzeug das Werkstück vollständig bis zu dessen Außenseite durchschneidet, die an der Seitenanschlagfläche der Seitenanschlageinrichtung anliegt.

Die Halteeinrichtung kann eine lösbare Befestigung der Seitenanschlageinrichtung an der Führungsschiene vorsehen, so dass die Seitenanschlageinrichtung bei Nichtgebrauch auch entfernt werden kann. Weiterhin kann es notwendig sein, dass die Seitenanschlageinrichtung zur Einstellung der Winkelposition von der Führungsschiene entfernt und in einer anderen Winkelposition wieder an der Führungsschiene befestigt wird. Mithin ist es also vorteilhaft, wenn der Seitenanschlag anhand der Halteeinrichtung lösbar mit der Führungsschiene verbindbar ist. Die Seitenanschlageinrichtung kann mit der Führungsschiene beispielsweise formschlüssig verbindbar und/oder verschraubbar und/oder verklemmbar sein.

Die Seitenanschlageinrichtung kann an der Führungsschiene beispielsweise ausschließlich rechtwinkelig oder in mindestens zwei, insbesondere rasterartig oder dediziert vorgesehenen, Winkelstellungen bezüglich der Längserstreckung oder Längsrichtung der Führungsschiene befestigt oder befestigbar sein, sodass die Seitenanschlagfläche rechtwinkelig oder in der jeweiligen Winkelstellung zur Längserstreckung oder Längsrichtung der Führungsschiene verläuft.

Nachfolgend werden jedoch einige Varianten erläutert, anhand derer die Seitenanschlageinrichtung relativ zu Führungsschiene verstellbar, insbesondere verschieblich und/oder verschwenkbar ist. Insbesondere ergeben sich dadurch Vorteile bei der Handhabung:
Die Halteeinrichtung weist zweckmäßigerweise einen Schlitten auf, der an der Führungsschiene an deren Längserstreckung geführt ist. Der Schlitten ist beispielsweise an der mindestens einen Führungskontur geführt. Selbstverständlich kann für den Schlitten auch eine andere Führungskontur vorgesehen sein als für den Führungsschlitten, der das Schneidwerkzeug bzw. das Antriebsaggregat stützt. Anhand des Schlittens kann die Seitenanschlageinrichtung in unterschiedliche Längspositionen bezüglich der Längserstreckung der Führungsschiene verstellt werden.

Der Schlitten weist zweckmäßigerweise eine Fixiereinrichtung auf, mit der der Schlitten in mindestens zwei Längspositionen bezüglich der Längserstreckung der Führungsschiene an der Führungsschiene fixierbar, beispielsweise verklemmbar, verschraubbar oder dergleichen ist. Die Fixiereinrichtung umfasst zweckmäßigerweise einen Klemmhebel. Die Fixiereinrichtung umfasst beispielsweise einen Nutenstein oder Gleitkörper, der in eine Führungsnut und mithin in eine Führungskontur der Führungsschiene eingreift.

Der Schlitten ist zweckmäßigerweise an der Führungsschiene schwenkbar gelagert. Durch diese Schwenkbarkeit sind unterschiedliche Vorteile erzielbar. Beispielsweise kann die Seitenanschlageinrichtung in eine mit der Führungsschiene fluchtende Transportposition verstellt werden. Dabei ist es möglich, dass die Seitenanschlageinrichtung fest mit dem Schlitten verbunden ist und der Schlitten seinerseits wiederum relativ zur Führungsschiene geschwenkt wird. Es ist somit auch möglich, dass die schwenkbare Lagerung des Schlittens an der Führungsschiene zur Einstellung der Winkelposition der Seitenanschlageinrichtung bezüglich der Führungsschiene nutzbar ist.

Aus den vorstehenden Ausführungen ist der Vorteil der nachfolgenden Variante der Erfindung offensichtlich. Vorteilhaft weist die Halteeinrichtung ein Schwenklager auf, so dass die Seitenanschlageinrichtung an der Führungsschiene um eine insbesondere zu der Längserstreckung und/oder zu der Führungsoberfläche der Führungsschiene senkrechte Schwenkachse schwenkbar ist. Dadurch können die Winkelpositionen der Seitenanschlagfläche bezüglich der Längserstreckung der Führungsschiene und somit auch bezüglich der Schnittrichtung oder Arbeitsrichtung eingestellt werden. Die Seitenanschlagfläche kann zur Führungsoberfläche der Führungsschiene senkrecht oder schräg geneigt sein. Mithin kann also das Schwenklager auch dazu dienen, die Seitenanschlagfläche zu Führungsoberfläche schräg geneigt auszurichten. Bevorzugt ist jedoch die Schwenkachse senkrecht zur Führungsoberfläche der Führungsschiene, sodass die Führungsoberfläche und die Seitenanschlagfläche senkrecht zueinander sind.

Das Schwenklager kann wie erläutert bereits durch den relativ zur Führungsschiene schwenkbaren Schlitten bereitgestellt werden. Weiterhin ist es möglich, dass das Schwenklager an einem Haltekörper vorgesehen ist, der bezüglich der Führungsschiene nicht längsverschieblich ist, sondern beispielsweise fest an der Führungsschiene angeordnet ist. Die Führungsschiene kann auch beispielsweise einen Lagervorsprung oder eine Lageraufnahme für die Seitenanschlageinrichtung oder dessen Halteeinrichtung zur Einstellung einer Winkelstellung der Seitenanschlagfläche bezüglich der Längserstreckung der Führungsschiene aufweisen.

Eine bevorzugte Ausführungsform sieht vor, dass das Schwenklager an dem an der Führungsschiene geführten Schlitten angeordnet ist. Somit kann die Seitenanschlageinrichtung bezüglich des Schlittens geschwenkt werden, der seinerseits wiederum bezüglich der Führungsschiene linear verschieblich ist, vorzugsweise auch verschwenkbar.

An dieser Stelle sei eine besonders bevorzugte Ausführungsform der Erfindung erläutert, die auch in der Zeichnung realisiert ist. Der Schlitten ist schwenkbar an der Führungsschiene gelagert und zudem die Seitenanschlageinrichtung anhand des Schwenklagers schwenkbar am Führungsschlitten gelagert. Durch diese sozusagen doppelte Verschwenkbarkeit ist eine besonders einfache Verstellung der Seitenanschlageinrichtung in eine mit der Führungsschiene fluchtende Transportstellung möglich. Die Schwenkachsen beider Schwenklagerungen sind zweckmäßigerweise parallel zueinander und/oder senkrecht zur Längserstreckung und/oder zur Führungsoberfläche der Führungsschiene. Durch die sozusagen doppelte Verschwenkbarkeit oder die Schwenkfreiheitsgrade des Schwenklagers zwischen der Seitenanschlageinrichtung und dem Schlitten sowie dem Schlitten und der Führungsschiene ist die Verstellbarkeit der Seitenanschlageinrichtung relativ zur Führungsschiene besonders groß. Die Schwenkfreiheitsgrade bzw. Schwenkwinkel beider Schwenklager addieren sich zweckmäßigerweise.

Die Seitenanschlageinrichtung weist zweckmäßigerweise eine Längsgestalt auf. Insbesondere ist die Seitenanschlageinrichtung als eine Art Führungslineal ausgestaltet. Eine Längslänge der Seitenanschlageinrichtung beträgt mindestens 50%, vorzugsweise mindestens 80%, der Längslänge der Führungsschiene. Somit ist also eine besonders lange Seitenanschlagfläche vorgesehen. An dieser Stelle wird auch der Vorteil der oben genannten Verstellbarkeit noch deutlicher. Indem nämlich die Führungsschiene und das Führungslineal bzw. die Seitenanschlageinrichtung in eine miteinander fluchtende gebracht werden können, ist eine leichte Transportierbarkeit gewährleistet. Dazu kommt noch, dass der Schlitten der Halteeinrichtung bzw. der Seitenanschlageinrichtung bezüglich der Führungsschiene verschieblich ist, so dass die Seitenanschlageinrichtung und die Führungsschiene in miteinander fluchtende Position gebracht werden können, bei der die Seitenanschlageinrichtung weder quer noch längs zur Längserstreckung der Führungsschiene vor die Führungsschiene vorsteht.

Eine Fixiereinrichtung zur Fixierung des Schlittens bezüglich der Führungsschiene ermöglicht zweckmäßigerweise eine Fixierung des Führungsschlittens nicht nur in mindestens zwei Längspositionen bezüglich der Längserstreckung der Führungsschiene, sondern auch mit mindestens einer Winkelposition des Schlittens bezüglich der Führungsschiene.

An der Seitenanschlageinrichtung, insbesondere dem als Führungslineal oder einem eine Längsgestalt aufweisenden Seitenanschlagkörper, ist zweckmäßigerweise eine Queranschlageinrichtung, insbesondere mindestens ein Queranschlagkörper, angeordnet oder anordenbar. Die Queranschlageinrichtung oder der Queranschlagkörper weist eine zu der Seitenanschlagfläche winkelige Queranschlagfläche für das Werkstück auf. Die Queranschlagfläche kann beispielsweise parallel zur Längserstreckung der Führungsschiene orientiert sein oder ausgerichtet werden, so dass das Werkstück einerseits an der Seitenanschlagfläche, andererseits an der Queranschlagfläche abgestützt ist.

Die Queranschlageinrichtung ist an der Seitenanschlageinrichtung vorzugsweise bezüglich deren Längserstreckung geführt. Mithin ist also die Queranschlageinrichtung vorteilhaft an der Seitenanschlageinrichtung bezüglich deren Längserstreckung verschieblich gelagert.

Die Queranschlageinrichtung kann also beispielsweise als eine Art Reiter an der Seitenanschlageinrichtung angeordnet sein und an der Seitenanschlageinrichtung verschoben werden.

Weiterhin ist es vorteilhaft, wenn die Queranschlageinrichtung anhand von Fixiermitteln, beispielsweise einer Klemmeinrichtung, Verschraubung, einer Verriegelung oder dergleichen, lösbar fixierbar an der Seitenanschlageinrichtung angeordnet ist. So ist beispielsweise möglich, dass an der Seitenanschlageinrichtung eine Anordnung von mehreren nebeneinander angeordneten Rastkonturen, insbesondere Rastvertiefungen, vorgesehen ist, mit denen die Queranschlageinrichtung verrastbar ist. Mit Hilfe einer Verklemmung ist eine quasi stufenlose Verstellung oder Einstellung der Queranschlageinrichtung oder des Queranschlagkörpers bezüglich der Längserstreckung der Seitenanschlageinrichtung möglich.

Vorteilhaft ist vorgesehen, dass das Schneidwerkzeug ein mit dem Antriebsaggregat der Hand-Werkzeugmaschine anhand der Verbindungsmittel verbundenes oder verbindbares Stützteil aufweist, das eine Längsgestalt aufweist und sich entlang einer Längsachse erstreckt, wobei der Schneidkörper des Schneidwerkzeugs durch das Antriebsaggregat der Hand-Werkzeugmaschine antreibbar und an einer Linearführung des Stützteils gelagert ist.

Bei dem Schneidwerkzeug handelt es sich vorzugsweise um ein Schneidwerkzeug zum Schneiden von Dämmstoffen, insbesondere Schaumstoffmaterial oder Fasermaterial. Insbesondere ist das Schneidwerkzeug zum Schneiden von Dämmstoffblöcken, Isolationsblöcken, Wärmeschutz-Material oder dergleichen geeignet.

Der durch das Antriebsaggregat der Hand-Werkzeugmaschine antreibbare Schneidkörper ist vorteilhaft parallel zur Längsachse des Stützteils beweglich gelagert.

Bei der Hand-Werkzeugmaschine handelt es sich vorzugsweise um eine Dämmstoffsäge.

Insbesondere ist das Schneidwerkzeug und/oder die Hand-Werkzeugmaschine zum Schneiden von Dämmstoffen, Dämmstoffblöcken, Dämmstoffbahnen, Isolationsblöcken, Wärmeschutz-Material oder dergleichen geeignet oder vorgesehen.

Die Schneidkanten sind vorzugsweise in der Art von Messer-Schneidkanten ausgestaltet. Beispielsweise ist das bewegliche Bauteil, nämlich der durch die Hand-Werkzeugmaschine antreibbare Schneidkörper, in der Art eines Schneidmessers ausgestaltet. Das Stützteil ist in der Art eines Schwerts ausgestaltet und gibt dem beweglichen Schneidkörper sozusagen Halt und Führung. Durch die ortsfeste Schneidkante ist das Schneidergebnis deutlich verbessert. Die bewegliche Schneidkante säbelt sozusagen in das Werkstück hinein, welches zudem noch einen Schnitt durch die ortsfeste Schneidkante erfährt. Die ortsfeste Schneidkante sorgt weiterhin dafür, dass das Werkstück leichter an dem Schneidwerkzeug entlang gleiten kann oder am Schneidwerkzeug vorbei gleiten kann.

Denkbar ist es, dass eine oder beide Schneidkanten beispielsweise Sägezähne aufweisen. Insbesondere zum Einschneiden in Dämmwerkstoffe sind jedoch vergleichsweise glatte Schneidkanten zweckmäßig. Es ist möglich, dass eine Schneidkante einen linearen, geradlinigen Verlauf hat, während die andere Schneidkante Sägezähne oder, was bevorzugt ist, einen Wellenschliff aufweist. Bevorzugt ist es, wenn beide Schneidkanten einen Wellenschliff aufweisen.

Eine Längserstreckung der beiden Schneidkanten bezüglich der Längsachse ist vorzugsweise etwa gleich lang. Weiter ist es vorteilhaft, wenn die Länge der ortsfesten Schneidkante so ausgestaltet ist, dass die bewegliche Schneidkante stets neben einem Abschnitt der ortsfesten Schneidkante vorbei bewegt wird. Beide Schneidkanten sind vorzugsweise etwa gleich lang, wobei gleich angemerkt sei, dass selbstverständlich auch zwei ortsfeste Schneidkanten vorgesehen sein können, insbesondere zwei ortsfeste Schneidkanten, zwischen denen die bewegliche Schneidkante oszillierend hin und her bewegt wird. In diesem Fall ist es vorteilhaft, wenn jede oder alle Schneidkanten in Bezug auf die Längserstreckung oder Längsachse gleich lang sind.

Eine Variante kann vorsehen, dass die bewegliche Schneidkante stets bei der oszillierenden Linearbewegung stets neben mindestens einem Abschnitt einer ortsfesten Schneidkante entlang bewegbar oder bewegt ist. Dabei ist es möglich, dass im Falle zweier ortsfester Schneidkanten diese Schneidkanten kürzer als die bewegliche Schneidkante sind, jedoch in Reihe parallel zur Längsachse des Schneidwerkzeugs hintereinander angeordnet sind, wobei ein Überlappungsbereich bezüglich der Längsachse möglich ist.

Eine Schrägneigung der Schneidkanten ist vorzugsweise so ausgestaltet, dass diese, wenn sie nebeneinander angeordnet sind, eine Spitze ausbilden. Mithin ist also die eine Schneidkante von der anderen Schneidkante weg schräg geneigt.

Die ortsfeste Schneidkante kann unmittelbar an dem Stützteil angeordnet sein. Beispielsweise kann ein blattförmiger oder wandartiger Stützkörper des Stützteils eine ortsfeste Schneidkante aufweisen. Bevorzugt ist jedoch eine Ausführungsform, bei der die ortsfeste Schneidkante an einem von dem Stützteil separaten und am Stützteil beim Betrieb des Schneidwerkzeugs ortsfest angeordneten Schneidkörper vorgesehen ist. Somit kann beispielsweise der ortsfest angeordnete Schneidkörper ausgetauscht werden, wenn er verschlissen ist. Auch eine Nachbearbeitung der Schneidkante, zum Beispiel ein Schleifen oder dergleichen, ist leichter möglich. Zudem kann das Schneidwerkzeug verschiedene Schneidkörper aufweisen, die unterschiedliche Arten oder Ausprägungen von Schneidkanten aufweisen. Ein und dasselbe Stützteil kann somit mit Schneidkörpern ausgerüstet werden, die sich für unterschiedliche Werkstücke eignen. So können beispielsweise Schneidkörper mit Wellenschliff, Schneidkörper mit Sägezähnen oder Schneidkörper mit geradlinigem Schliff verwendet werden.

Es ist möglich, Schneidkörper mit unterschiedlichen Schneidkanten zu kombinieren, zum Beispiel einen Schneidkörper mit Wellenschliff mit einen Schneidkörper, der eine geradlinige Schneidkante aufweist. Jederzeit ist es möglich, einen dieser Schneidkörper wieder auszutauschen, so dass beispielsweise zwei Schneidkörper mit Wellenschliff verwendet werden.

An dieser Stelle sei noch bemerkt, dass auch der von dem Stützkörper separate Schneidkörper mit der ortsfesten Schneidkante fest an dem Stützkörper befestigt sein kann, beispielsweise verklebt, verschweißt, vernietet oder dergleichen. Bevorzugt ist es jedoch, wenn der die ortsfeste Schneidkante aufweisende Schneidkörper lösbar an dem Stützteil angeordnet ist, beispielsweise mit dem Stützteil verhakt, verschraubt oder dergleichen ist.

Die Linearführung weist zweckmäßigerweise eine sich parallel zu der Längsachse erstreckende Führungsaufnahme oder Längsnut auf. In der Führungsaufnahme oder Längsnut ist der durch das Antriebsaggregat antreibbare Schneidkörper angeordnet. Weiterhin ist es zweckmäßig, wenn in der Führungsaufnahme der die ortsfeste Schneidkante aufweisende Schneidkörper oder ein diese Schneidkante aufweisender Schneidkörper aufgenommen ist. Durch die Längsnut oder die Linearführung werden die beiden Schneidkörper, der ortsfeste und der angetriebene Schneidkörper, nahe beieinander gehalten.

Bevorzugt ist es, wenn der durch das Antriebsaggregat antreibbare Schneidkörper und ein die ortsfeste Schneidkante aufweisender Schneidkörper klingenartig oder blattartig ausgestaltet sind. Vorteilhaft ist es auch, wenn der durch das Antriebsaggregat antreibbare Schneidkörper und ein die ortsfeste Schneidkante aufweisender Schneidkörper mit ihren Flachseiten aufeinander liegen.

Eine sich in Arbeitsrichtung erstreckende Tiefe des ortsfesten und/oder des durch das Antriebsaggregat aufweisenden Schneidkörpers ist zweckmäßigerweise nur maximal halb so groß, zweckmäßigerweise etwa 30% so groß wie eine entsprechende Tiefe des Stützteils. Mithin ist also das Stützteil vergleichsweise bereit und/massiv und somit stabil.

Auch das Stützteil weist zweckmäßigerweise einen Blattkörper oder einen wandartigen Körper auf. Das Stützteil kann auch beispielsweise durch ein Stützblech gebildet sein oder ein solches aufweisen.

Bevorzugt ist es, wenn das Schneidwerkzeug Einstellmittel zum Einstellen einer Relativposition der bezüglich des Stützteils ortsfesten Schneidkante und der Schneidkante des durch das Antriebsaggregat antreibbaren Schneidkörpers aufweist. Dabei ist beides möglich, nämlich dass die ortsfeste Schneidkante zur Schneidkante des antreibbaren Schneidkörpers hin oder von dieser weg bewegt wird. Es ist auch möglich, dass das bewegliche Bauteil, nämlich der durch das Antriebsaggregat antreibbare Schneidkörper durch die Einstellmittel verstellbar ist. Beispielsweise können den beweglichen Schneidkörper führende Führungskonturen derart positioniert werden, dass die bewegliche Schneidkante zu der ortsfesten Schneidkante näher hin oder von dieser weg positioniert wird. Möglich wäre beispielsweise, dass die Linearführung verstellbar Stützteil gelagert ist.

Die Einstellmittel sind zweckmäßigerweise zur Einstellung einer Position der Schneidkante des durch das Antriebsaggregat antreibbaren Schneidkörpers und/oder zur Einstellung einer Position der ortsfesten Schneidkante bezüglich des Stützteils ausgestaltet. Mithin können also die bewegliche und die Schneidkante durch die Einstellmittel positionierbar sein oder auch nur eine der beiden Schneidkanten.

Die Einstellmittel weisen zweckmäßigerweise mindestens zwei oder genau zwei Einstelleinrichtungen auf. Die Einstelleinrichtungen sind beispielsweise an den Längsendbereichen des Stützteils angeordnet. Mithin sind die Einstelleinrichtungen in Bezug auf die Längsachse des Stützteils mit Abstand zueinander angeordnet. Durch die beiden Einstelleinrichtungen kann an zueinander beabstandeten Positionen die jeweilige Einstellung erfolgen.

Die Einstellmittel sind zweckmäßigerweise zur Einstellung der Position mindestens einer der Schneidkanten bezüglich der anderen Schneidkante in Arbeitsrichtung nach vorn oder in Arbeitsrichtung nach hinten oder beides ausgestaltet. Mithin läuft also die bewegliche Schneidkante in Arbeitsrichtung zweckmäßigerweise unmittelbar neben der ortsfesten Schneidkante auf und ab bzw. wird vom Antriebsaggregat hin und her bewegt. So kann beispielsweise die bewegliche Schneidkante relativ zur ortsfesten Schneidkante in Arbeitsrichtung nach vorn oder nach hinten durch die Einstellmittel verlagerbar sein. Beispielsweise wird dazu die Linearführung vor und zurück positioniert. In Kombination mit dieser Ausführungsform oder unabhängig davon ist es aber vorteilhaft und beim in der Zeichnung dargestellten Ausführungsbeispiel realisiert, dass die ortsfeste Schneidkante, die an einem beim Betrieb des Schneidwerkzeugs an sich ortsfesten Schneidkörper vorgesehen ist, in Arbeitsrichtung nach vorn oder hinten verstellt wird, so dass beispielsweise Fertigungstoleranzen der Schneidkörper ausgeglichen sind.

Weiterhin ist es aber auch möglich, dass ein Querabstand quer zur Arbeitsrichtung der Schneidkanten durch die Einstellmittel einstellbar ist. Die Einstellmittel sind zweckmäßigerweise zur Einstellung der Position mindestens einer der Schneidkanten bezüglich der anderen Schneidkante quer, beispielsweise rechtwinkelig quer, zu der Arbeitsrichtung ausgestaltet. Somit kann beispielsweise die Scherwirkung oder Messerwirkung oder Säbelwirkung der Schneidkanten relativ zueinander verbessert werden.

Die Einstellmittel können unterschiedliche Arten von Getrieben oder Einstellmitteln aufweisen. Beispielsweise weisen die Einstellmittel einen Exzenterkörper oder ein Exzentergetriebe zur exzentrischen Verstellung mindestens einer der Schneidkanten oder eines eine jeweilige Schneidkante aufweisenden Schneidkörpers auf. Es können aber auch beispielsweise Schraubenanordnungen, Keilanordnungen oder dergleichen andere Mittel als Einstellmittel vorgesehen sein, mit denen die Relativposition der Schneidkanten einstellbar ist.

Bevorzugt weisen die Einstellmittel eine Rastanordnung zum Verrasten eines Stellgliedes der Einstellmittel auf, so dass das Stellglied in mindestens einer eine der Schneidkanten positionierenden Stellposition verrastbar ist. So kann beispielsweise ein Stellglied schwenkbar am Stützteil gelagert sein, welches in zwei oder mehreren Stellpositionen verrastbar ist. Zu der Verrastung ist zweckmäßigerweise ein Federelement vorgesehen, welches in eine Rastposition federbelastet ist oder ein Rastglied aufweist. Insbesondere weist das Federglied einen Rastvorsprung auf, der in eine Rastausnehmung oder in eine Anordnung von Rastausnehmungen des Stellglieds einrasten kann. Das Stellglied weist beispielsweise eine Stellkurve, insbesondere eine Exzenterkurve, zur Einstellung oder Verstellung einer der Schneidkanten auf. Insbesondere ist es vorteilhaft, wenn an dem Stellglied ein Stellarm mit einem Kulissenfolger vorhanden ist, welcher in eine Kulissenaufnahme eines die jeweils einzustellende Schneidkante aufweisenden Schneidkörpers eingreift.

Eine Querbreite des Stützteils quer zu der Arbeitsrichtung beträgt maximal das 2-fache, insbesondere maximal das 1,5-fache einer Querbreite des durch das Antriebsaggregat antreibbaren Schneidkörpers. Mithin ist also das Stützteil besonders schmal.

Weiterhin ist es zweckmäßigerweise möglich, dass die Schneidkante des beweglichen Schneidkörpers zwischen zwei ortsfesten Schneidkanten des Stützteils sandwichartig angeordnet ist. Beispielsweise können Seitenflächen oder Seitenkanten der Linearführung als Schneidkanten ausgestaltet sein. Es ist auch möglich, dass nur eine Seitenkante der Linearführung als ortsfeste Schneidkante ausgestaltet ist, die unmittelbar vom Stützteil bereitgestellt wird, während die andere Schneidkante, die an sich ortsfest ist, durch ein weiteren Schneidkörper, der nicht vom Antriebsaggregat angetrieben ist, bereitgestellt wird.

Nachfolgend wird ein an sich eigenständiges Erfindungskonzept vorgestellt.

Eine bevorzugte Variante sieht nämlich vor, dass an einem freien, vom Antriebsaggregat abgewandten Längsendbereich des Stützteils ein Führungsschlitten zum Führen der Hand-Werkzeugmaschine an einer Arbeitsoberfläche vorgesehen ist. Der Führungsschlitten ist fest an dem Stützteil angeordnet oder ist anhand von Fixiermitteln lösbar mit dem Stützteil verbindbar.

Ein derartiger Führungsschlitten sowie das Schneidwerkzeug bilden zweckmäßigerweise einen Bestandteil eines Führungssystems. Auch die Hand-Werkzeugmaschine kann ein Bestandteil dieses Führungssystems bilden. Das Führungssystem umfasst zudem noch eine Führungsschiene, die mindestens eine sich entlang ihrer Längserstreckung erstreckende Führungskontur zum Führen des Führungsschlittens aufweist. Das Stützteil bildet eine mit dem Führungsschlitten verbundene oder verbindbare Stützeinrichtung zum Stützen des Antriebsaggregates der Hand-Werkzeugmaschine in einem zum Auflegen des Werkstückes auf die Führungsschiene vorgesehenen Abstand zu den Führungsschlitten, so dass das Schneidwerkzeug in dem Abstand zwischen der Führungsschiene und dem Antriebsaggregat zum Einschneiden in das auf der Führungsschiene aufliegende Werkstück angeordnet ist.

Nachfolgend wird ein Ausführungsbeispiel der Erfindung anhand der Zeichnung erläutert. Es zeigen:
- Figur 1: eine perspektivische Schrägansicht einer Hand-Werkzeugmaschine mit Schneidwerkzeug sowie einem Führungsschienensystem, wobei ein Werkstück angedeutet ist,
- Figur 2: das Ausführungsbeispiel gemäß Figur 1, wobei ein Antriebsaggregat der Hand-Werkzeugmaschine entfernt ist und das Führungsschienensystem eine andere Stellung einnimmt,
- Figur 3: eine perspektivische Schrägansicht der Hand-Werkzeugmaschine gemäß Figur 1 von schräg seitlich unten,
- Figur 4: ein Detail D1 aus Figur 3, wobei eine Werkzeugschnittstelle der Hand-Werkzeugmaschine zum Entfernen eines Schneidwerkzeugs geöffnet ist,
- Figur 5: eine Ansicht entsprechend Figur 4, wobei das Schneidwerkzeug entfernt ist,
- Figur 6: das Schneidwerkzeug der Handwerkzeugmaschine gemäß vorstehender Figuren sowie einen Führungsschlitten in noch voneinander entferntem Zustand,
- Figur 7: die Ansicht etwa entsprechend Figur 6, wobei das Schneidwerkzeug und der Führungsschlitten miteinander verbunden sind,
- Figur 8: einen Ausschnitt einer Draufsicht auf den Führungsschlitten gemäß Figur 6 von oben,
- Figur 9: eine Teilansicht des Führungsschlittens gemäß Figuren 6-8 von unten,
- Figur 10: eine Querschnittsansicht durch den Führungsschlitten gemäß Figuren 6-9, etwa entsprechend einer Schnittlinie A-A in Figur 8,
- Figur 11: eine Seitenansicht des Schneidwerkzeugs der Hand-Werkzeugmaschine gemäß Figur 3,
- Figur 12: eine Einstelleinrichtung des Schneidwerkzeugs gemäß Figur 11 in vergrößerter Darstellung, etwa entsprechend einem Ausschnitt D2 in Figur 11,
- Figur 13: ein Stellglied der Einstelleinrichtung gemäß Figur 12,
- Figur 14: das Schneidwerkzeug gemäß Figur 11 perspektivisch schräg dargestellt von der entgegengesetzten Seite, wobei ein beweglicher Schneidkörper noch nicht an einem Stützteil des Schneidwerkzeugs angeordnet ist,
- Figur 15: das Schneidwerkzeug gemäß Figur 14 mit am Stützteil angeordnetem beweglichen Schneidkörper,
- Figur 16: einen freien Längsendbereich des Schneidwerkzeugs gemäß Figur 15, etwa entsprechend einem Ausschnitt D3 in Figur 15,

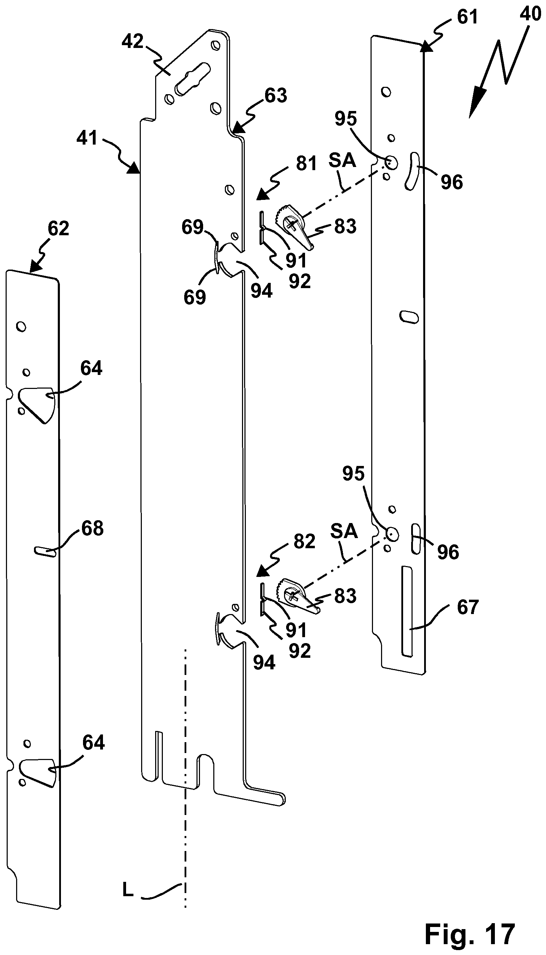

- Figur 17: eine Explosionsdarstellung des Schneidwerkzeugs gemäß Figur 11,
- Figur 18: die Anordnung gemäß Figur 2 von schräg oben,
- Figur 19: eine perspektivische Schrägansicht des Führungssystems von schräg vorn, bei der das Schneidwerkzeug in eine Aussparung einer Seitenanschlageinrichtung eingreift,
- Figur 20: die Konfiguration gemäß Figur 19 von schräg hinten,
- Figur 21: eine Draufsicht auf die Anordnung gemäß Figur 19 von frontal oben,
- Figur 22: einen Querschnitt durch eine Halteeinrichtung der Seitenanschlageinrichtung, etwa entlang einer Schnittlinie V-V in Figur 21,

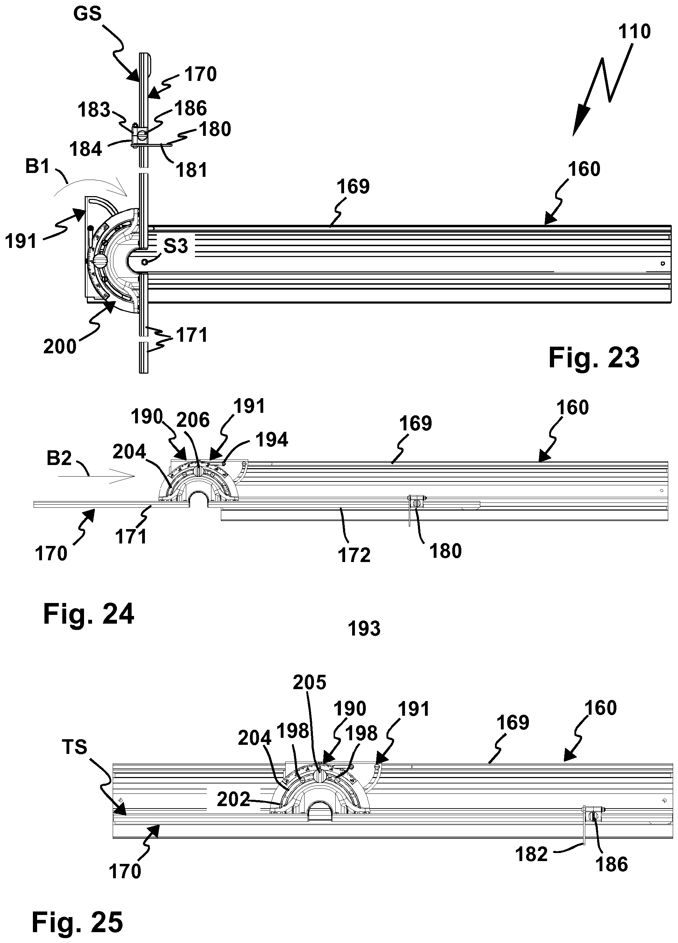

- Figur 23: die Anordnung gemäß Figur 21 mit der Seitenanschlageinrichtung in Arbeitsposition,

- Figur 24: die Anordnung gemäß Figur 23, wobei die Seitenanschlageinrichtung in eine mit der Führungsschiene fluchtende Position verstellt ist, und
- Figur 25: die Anordnung gemäß Figuren 23, 24, wobei die Seitenanschlageinrichtung relativ zur Führungsschiene in eine Transportposition verstellt ist.

Eine Hand-Werkzeugmaschine 10 weist ein Antriebsaggregat 11 auf. Das Antriebsaggregat 11 umfasst ein Maschinengehäuse 12. Das Maschinengehäuse 12 weist einen Handgriffabschnitt 12A zum Ergreifen oder Umgreifen durch einen Bediener auf. Der Handgriffabschnitt 12A ist zwischen einem Motorabschnitt 13 und einem Anschlussabschnitt 14 zum Anschließen eines elektrischen Energiespeichers 17, beispielsweise eines Akku-Packs, angeordnet. Der elektrische Energiespeicher 17 ist vorzugsweise lösbar von dem Anschlussabschnitt 14 ausgestaltet.

Die Hand-Werkzeugmaschine 10 ist vorliegend eine Akku-Maschine oder eine netzungebunden betreibbare Hand-Werkzeugmaschine, was die Handhabbarkeit erleichtert. Allerdings ist ohne weiteres auch eine kabelgebundene Variante möglich. Die Hand-Werkzeugmaschine weist in diesem Fall einen Netzanschluss 17B für ein Wechselstromnetz, insbesondere ein Anschlusskabel mit einem Stecker und/oder eine Buchse für ein Anschlusskabel, auf. Selbstverständlich kann auch eine Hybrid-Variante realisiert sein, die einerseits einen Anschluss für einen elektrischen Energiespeicher wie die Hand-Werkzeugmaschine 10, andererseits auch einen Netzanschluss 17B aufweist.

Im Bereich des Handgriffabschnittes 12A befindet sich ein Schalter 18, mit dem ein Antriebsmotor 16, der im Motorabschnitt 13 aufgenommen ist, einschaltbar und ausschaltbar ist. Ohne weiteres kann mit dem Schalter 18 auch eine Drehzahländerung bewirkt werden, d.h. dass beispielsweise eine Drehzahl des Antriebsmotors 16 durch den Schalter 18 oder mit dem Schalter 18 abschaltbar ist. Weitere Komponenten zur elektrischen Ansteuerung des Antriebsmotors 16, beispielsweise eine Leistungselektronik, eine Bestromungseinrichtung oder dergleichen, sind aus Gründen der Vereinfachung nicht dargestellt. Sie sind beispielsweise im Handgriffabschnitt 12 untergebracht.

Am Motorabschnitt 13 ist zudem noch ein Absauganschluss 15, beispielsweise ein Anschlussstutzen zum Anschließen einer Absaugeinrichtung, insbesondere eines Saugschlauches SL vorgesehen. Über den Absauganschluss 15 können beim Betrieb der Hand-Werkzeugmaschine 10 anfallende Späne, Staub oder dergleichen, abgesaugt werden. Der Absauganschluss 15 ist mit einer Werkzeugaufnahme 19 oder dem Bereich oberhalb um die Werkzeugaufnahme 19 strömungsverbunden.

Die Werkzeugaufnahme 19 ist durch den Antriebsmotor 16 antreibbar. Der Antriebsmotor 16 könnte beispielsweise ein Linearmotor sein, der die Werkzeugaufnahme 19 zu einer oszillierenden Linearbewegung direkt antreibt. Vorliegend ist jedoch ein Getriebe 16A zwischen dem Antriebsmotor 16 und der Werkzeugaufnahme 19 angeordnet, welches eine drehende Bewegung des Antriebsmotors 16 in eine oszillierende Linearbewegung LB oder eine Hin- und Her-Bewegung umwandelt.

Die Hand-Werkzeugmaschine 10 bzw. deren Antriebsaggregat 11 ist lösbar mit einem Schneidwerkzeug 40 verbindbar. Das Schneidwerkzeug 40 umfasst ein Stützteil 41, dessen oberer Längsendbereich an einer Werkzeughalterung 20 befestigt werden kann. An dem Stützteil 41 ist ein Schneidkörper 50 beweglich gelagert, der durch das Antriebsaggregat 11 antreibbar ist. Der Schneidkörper 50 weist eine vordere, beim Betrieb der Hand-Werkzeugmaschine bewegte und somit bewegliche Schneidkante 51 sowie einen Antriebsabschnitt oder Schaft 52 auf, der mit der Werkzeugaufnahme 19 in Eingriff gebracht werden kann, beispielsweise in diese eingesteckt werden kann. Der Schaft 52 verrastet vorzugsweise mit der Werkzeugaufnahme 19 oder in der Werkzeugaufnahme 19. Zum Lösen und/oder Schließen der Werkzeugaufnahme 19 ist vorzugsweise eine Betätigungshandhabe 19A, beispielsweise eine Betätigungshülse, vorgesehen.

Seinen festen Halt erfährt das Schneidwerkzeug 40 jedoch im Wesentlichen durch die Werkzeughalterung 20, die das Stützteil 41 festhält.

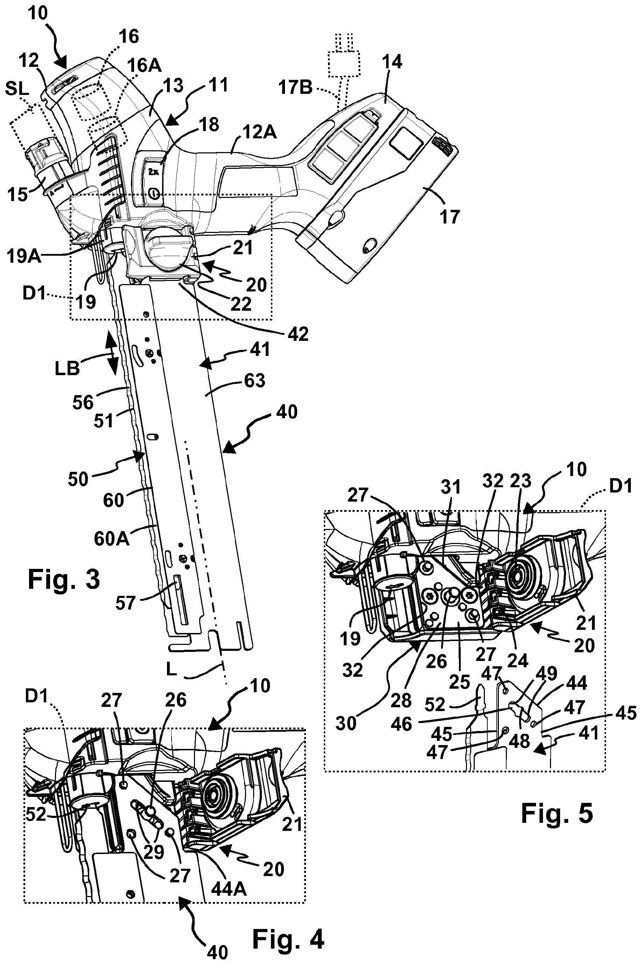

Die Werkzeughalterung 20 umfasst eine Aufnahme 25 in die der Längsendbereich 42 des Stützteils 41 eingebracht werden kann, wenn ein Deckel 21 der Werkzeughalterung 20 geöffnet ist (Figuren 4 und 5). Die Aufnahme 25 weist eine Stützfläche 28 zum Stützen einer Flachseite des Stützteils 41 auf. Seitlich stehen vor die Stützfläche 28 einander gegenüberliegende Seitenstützflächen 32 sowie zwischen den Seitenstützflächen 32 eine Seitenstützfläche 31 vor. Die Seitenstützflächen 32 dienen zur Abstützung von Schmalseiten oder Stirnseiten 45 am Längsendbereich 42 des Stützteils 41. Die Seitenstützfläche 31 verläuft schräg bezüglich der zueinander parallel verlaufenden Seitenstützflächen 32. Die Seitenstützfläche 31 stützt eine dementsprechend schräg verlaufende Stirnseite 44 des Stützteils 41 an seinem freien Längsendbereich 42 ab. Zudem kann sich optional noch eine Stufe 44A am Längsendbereich 42 außerhalb des die Werkzeugaufnahme 19 ausbildenden Abschnitts des Antriebsaggregates 11 abstützen. Beispielsweise ist der Längsendbereich 42 in seinem in die Aufnahme 25 eingreifenden Bereich etwas schmaler.

An diesem Haltebereich oder Längsendbereich 42 des Stützteils 41 sind Halteaufnahmen 46 und 47 ausgebildet. In die Halteaufnahmen 47 greifen Haltevorsprünge 27 der Werkzeughalterung 20 ein. Die Halteaufnahmen 47 und die Haltevorsprünge 27 sind beispielsweise in Eckbereichen eines gedachten Dreiecks angeordnet oder sind dreieckförmig angeordnet.

Die Halteaufnahme 46 hat eine Längsgestalt. In Längsendbereiche 49 greifen Haltevorsprünge 29 der Werkzeughalterung 20 ein. Zwischen den Längsendbereichen 49 ist ein Aufnahmebereich 48, vorgesehen, der etwas breiter ist und somit einen Haltevorsprung 26, der gegenüber den Haltevorsprüngen 27 und 29 einen größeren Durchmesser aufweist, aufnehmen kann.

Der Haltevorsprung 26 bildet beispielsweise einen Haltezapfen oder vorzugsweise eine Schraube oder einen Schraubabschnitt. Am Haltevorsprung 26 ist nämlich ein Schraubgewinde angeordnet, auf die eine am Deckel 21 angeordnete Mutter 23 aufgeschraubt werden kann.

Der Deckel 21 ist anhand eines Schwenklagers 24 zwischen der in Figur 4 und 5 dargestellten Offenstellung, in der die Aufnahme 25 zum Einbringen des Stützteils 41 offen ist, und einer in Figur 3 dargestellten Schließstellung verschließbar. In dieser Schließstellung liegt der Deckel 21 die Aufnahme 25 ab. Anhand einer Betätigungshandhabe 22, beispielsweise einer Knebelschraube oder dergleichen, kann die Mutter 23, die drehbar am Deckel 21 gelagert ist, auf das Schraubgewinde des Haltevorsprungs 26 aufgeschraubt werden, so dass der Deckel 21 gehalten ist und zudem das Stützteil 41 in der Aufnahme 25 nicht nur formschlüssig, sondern auch kraftschlüssig gehalten ist, nämlich verspannt ist. Somit findet das Stützteil 41 festen Halt in der Werkzeughalterung 20. Die stabile Grundkonstruktion aus Antriebsaggregat 11 und davon abstehendem, schwertartigem Stützteil 41 stellt für den Schneidkörper 50 eine optimale Führung und einen optimalen Halt bereit. Dadurch sind exakte Schnitte in einem Werkstück W, beispielsweise einem Dämmstoff-Block, ohne weiteres möglich. Zudem ist das Schneidwerkzeug 40 für diese Schneidaufgabe optimal ausgerüstet, was nachfolgend noch deutlicher wird.

Die Schneidkante 51 des Schneidkörpers 50 weist vorzugsweise einen Wellenschliff 58 auf. Alternativ wäre aber auch eine geradlinige Schneidkante oder eine Schneidkante mit Zähnen möglich. Die Schneidkante 51 erstreckt sich von einem Längsendbereich 53 nahe beim Schaft 52 des Schneidkörpers 50 bis zu einem längs davon entfernten bzw. dazu entgegengesetzten Längsendbereich 54. Der Schneidkörper 50 hat eine blattartige oder wandartige Gestalt, so dass er einander entgegengesetzte Flachseiten 56 aufweist, die in eine Führungsaufnahme 60 des Stützteils 41 eingreifen. Die Führungsaufnahme 60 bildet eine Linearführung 60A. Ebenso greift eine zu der beweglichen Schneidkante 51 entgegengesetzt am Schneidkörper 50 angeordnete Schmalseite oder Rückseite 55 in die Führungsaufnahme 60 ein.

Die Führungsaufnahme 60 wird seitlich von Führungskörpern 61, 62 begrenzt, die an einem Grundkörper 63 des Stützteils 41 befestigt sind, beispielsweise mit diesem verschweißt, verschraubt oder dergleichen fest verbunden sind. Alternativ denkbar wäre aber auch, dass der Grundkörper 63 und einer oder beide der Führungskörper 61, 62 aus einem Stück oder einstückig sind. Die Führungskörper 61, 62 sowie der Grundkörper 63 bestehen vorzugsweise aus dem gleichen Material, insbesondere aus Stahlblech oder einem sonstigen Metallblech. Die Führungskörper 61, 62 erstrecken sich vom Längsendbereich 42 bis zum freien Längsendbereich 43. Dementsprechend lang ist auch die Führungsaufnahme 60, d.h. dass der antreibbare Schneidkörper 50 über seine gesamte oder nahezu gesamte Längslänge in der Führungsaufnahme 60 aufgenommen und durch diese geführt ist. Seine Flachseiten 56 werden von Führungsabschnitten 65 der Führungskörper 61, 62 geführt, während sein Rücken oder seine Rückseite 55 sozusagen am Boden der Führungsaufnahme 60 abgestützt ist oder geführt ist, die von einer Schmalseite des Grundkörpers 63 des Stützteils 41 bereitgestellt wird. Mit dem Grundkörper 63 sind die Führungskörper 61, 62 Befestigungsabschnitten 66 verbunden. Die Befestigungsabschnitte und die Führungsabschnitte 65 weisen eine Längsgestalt auf. Die Führungsabschnitte 65 und die Befestigungsabschnitte 66 können plan ineinander übergehen oder beispielsweise eine parallel zur Längsachse L verlaufende Stufe aufweisen, so dass beispielsweise der Abstand zwischen den Führungsabschnitten 65 gegenüber einer Materialstärke oder Dicke des Grundkörpers 63 vergrößert oder verkleinert ist.

Am Führungskörper 61 ist eine Führungsaufnahme 67 für einen seitlich vor eine Flachseite 56 des Schneidkörpers 50 vorstehenden Führungsvorsprung 57, beispielsweise einem Führungszapfen, vorgesehen. Somit ist der Schneidkörper 50 am Längsendbereich 53 durch die Werkzeugaufnahme 19, im Längsendbereich 54, wo sich der Führungsvorsprung 57 befindet, durch die Führungsaufnahme 67 geführt. Die Führungsaufnahme 67 ist beispielsweise als eine Aussparung oder ein Längsschlitz ausgebildet. Die Führungsaufnahme 67 hat eine Längsgestalt. Die Führungsaufnahme 67 kann auch dazu dienen, dass der antreibbare Schneidkörper 50 bezüglich des Stützteils 51 in einer Arbeitsrichtung AR und/oder quer dazu geführt ist. Mithin kann also die Schmalseite oder Rückseite 50 des Schneidkörpers 50 auch einen Abstand zum Bodenführungsaufnahme 60 haben, wenn der Schneidkörper 50 durch den Führungsvorsprung 57 und die Führungsaufnahme 67 geführt ist.

In der Führungsaufnahme 60, die sich parallel zur Längsachse L erstreckt, ist zudem der relativ zum Stützteil 41 ortsfeste Schneidkörper 70 angeordnet. Ortsfest ist in dem Sinne zu verstehen, dass zwar der Schneidkörper 70 zur Positionierung relativ zu dem beweglichen Schneidkörper 50 bewegbar ist, jedoch dann ortsfest ist, wenn das Antriebsaggregat 11 den Schneidkörper 50 antreibt. Eine ortsfeste Schneidkante des Schneidkörpers 70 hat einen Wellenschliff 78. Vorzugsweise sind die Wellenschliffe 58, 78 gleichartig und/oder sind die Schneidkanten 51, 71 gleichartig, beispielsweise jeweils glatt, jeweils wellenförmig oder mit Zähnen versehen. Durch die Wellenstruktur der Wellenschliffe 78, 58 ist jedoch eine Art säbelndes Einschneiden in das Werkstück W besonders günstig realisierbar.

Der Schneidkörper 70 ist wie der Schneidkörper 50 in der Führungsaufnahme 60 aufgenommen. Mithin ist also auch der Schneidkörper 70 in einem gewissen Maße beweglich an dem ortsfesten Stützteil 41 und insbesondere dessen Grundkörper 63 gehaltert, nämlich um die Relativposition der beiden Schneidkörper 50, 70 und/oder deren Schneidkanten 51, 71 einzustellen.

Der Schneidkörper 70 liegt mit seinen Flachseiten 76 einerseits an der vom Führungskörper 61 bereitgestellten Innenseite der Führungsaufnahme 60, die vorzugsweise eine Führungsnut darstellt oder als eine solche ausgebildet ist, andererseits an der ihm gegenüberliegenden Flachseite 56 des beweglichen Schneidkörpers 50 an. Mithin gleitet also der Schneidkörper 50 mit einer Flachseite 56 am Schneidkörper 70, mit der anderen Flachseite an der Innenseite der Führungsaufnahme 60 entlang, die vom Führungskörper 62 bereitgestellt wird.

Ein Vorteil des modularen Konzepts des Schneidwerkzeugs 40 ist dadurch gegeben, dass auch der ortsfeste Schneidkörper 70 austauschbar ist, beispielsweise gegen einen Schneidkörper mit anderer Klinge bzw. anderer Schneidkante, beispielsweise ohne Wellenschliff, mit Sägezähnen oder dergleichen. Zur lösbaren Befestigung des Schneidkörpers 70 an dem Stützteil 41 ist beispielsweise eine Hakenanordnung vorgesehen. Beispielsweise greift ein vor eine der Flachseiten 76 vorstehender Führungsvorsprung 77 in eine Führungsaufnahme 68 des Führungskörpers 62 ein. Bevorzugt ist der Ort dieses Eingriffs zwischen Längsendbereichen 73, 74 des Schneidkörpers 70 vorgesehen, wobei selbstverständlich auch an den Längsendbereichen 73, 74 entsprechende Führungen vorgesehen sein können. Es können mehrere derartige Haken und Hakenaufnahmen vorgesehen sein. Eine Längserstreckung der Führungsaufnahme 77 ist quer zur Längsachse L, so dass der Schneidkörper 70 bezüglich der Arbeitsrichtung AR und/oder quer zur Längsachse L in Bezug auf die Schneidkante 51 verstellbar ist. Mithin kann also der Schneidkörper 70 in Bezug auf die Arbeitsrichtung AR näher zur beweglichen Schneidkante 51 hin oder von dieser weg bewegt werden. Somit können beispielsweise Fertigungstoleranzen ausgeglichen werden. Aber auch für einen Arbeitsbetrieb bzw. für Sägeschnitte in individuelle Werkstücke kann es vorteilhaft sein, wenn die Relativposition der Schneidkanten 51, 71 einstellbar ist.

Zu diesem Zweck sind Einstellmittel 80 vorgesehen, die eine oder mehrere Einstelleinrichtungen 81 umfassen. Beim Ausführungsbeispiel sind zwei Einstelleinrichtungen 81, 82 vorgesehen, zwischen den die Führung bzw. Verhakung anhand des Führungsvorsprunges 77 und der Führungsaufnahme 68 vorgesehen ist. Die Einstelleinrichtung 81 ist näher beim Längsendbereich 73, die Einstelleinrichtung 82 näher beim freien Endbereich des Schneidwerkzeugs 40, also beim Längsendbereich 74 des Schneidkörpers 70, vorgesehen.

Die Einstelleinrichtungen 81 und 82 sind im Wesentlichen baugleich, haben aber unterschiedliche Stellbereiche. Die Einstelleinrichtung 81 hat einen größeren Stellhub in Bezug auf den ortsfesten Schneidkörper 70 als die Einstelleinrichtung 82. Daher werden in der nachfolgenden Beschreibung gleiche oder gleichartige Bauteile der Einstelleinrichtungen 81, 82 einheitlich beschrieben.

Die Einstelleinrichtungen 81, 82 weisen jeweils ein Stellglied 83 auf, welches an dem ortsfesten Stützteil 41 um eine jeweilige Schwenkachse SA schwenkbar gelagert ist. Die Stellglieder 83 können beispielsweise Stellpositionen SP1 und SP2 sowie weitere zwischen den Stellpositionen SP1 und SP2 liegende Stellpositionen einnehmen, die in der Zeichnung nicht näher bezeichnet sind. Die Relativposition der Schneidkanten 51, 71 ist von der jeweiligen Stellposition des Stellglieds 83 abhängig.

Die Stellglieder 83 weisen Drehlagerkörper 84 auf, die mit einem in der Zeichnung nicht sichtbaren Abschnitt in Lageraufnahmen 95 eingreifen können. Die Lageraufnahmen 95 sind beispielsweise am Führungskörper 61 angeordnet. Es ist aber auch möglich, dass die Stellglieder 83 unabhängig vom Führungskörper 62 schwenkbar gelagert sind, beispielsweise schwenkbar am Führungskörper 62 gelagert sind.

Am Führungskörper 62 hingegen sind Aussparungen 64 für die Stellglieder 83 vorgesehen. Durch die Aussparungen 64 hindurch sind die Stellglieder 83 betätigbar. Beispielsweise sind an den Drehlagerkörpern 84 Betätigungshandhaben, insbesondere manuelle Betätigungshandhaben, oder wie vorliegend Aufnahmen 85 für Werkzeuge, beispielsweise Schraubenzieher oder dergleichen, vorgesehen. Ein bevorzugtes Konzept sieht jedenfalls vor, dass die Stellglieder 83 nicht vor eine von der Führungsaufnahme 60 abgewandte Außenseite des Stützteils 41, mithin also nicht vor die Führungskörper 61, 62 vorstehen. Somit sind beim Sägeschnitt in das Werkstück W nicht hinderlich.

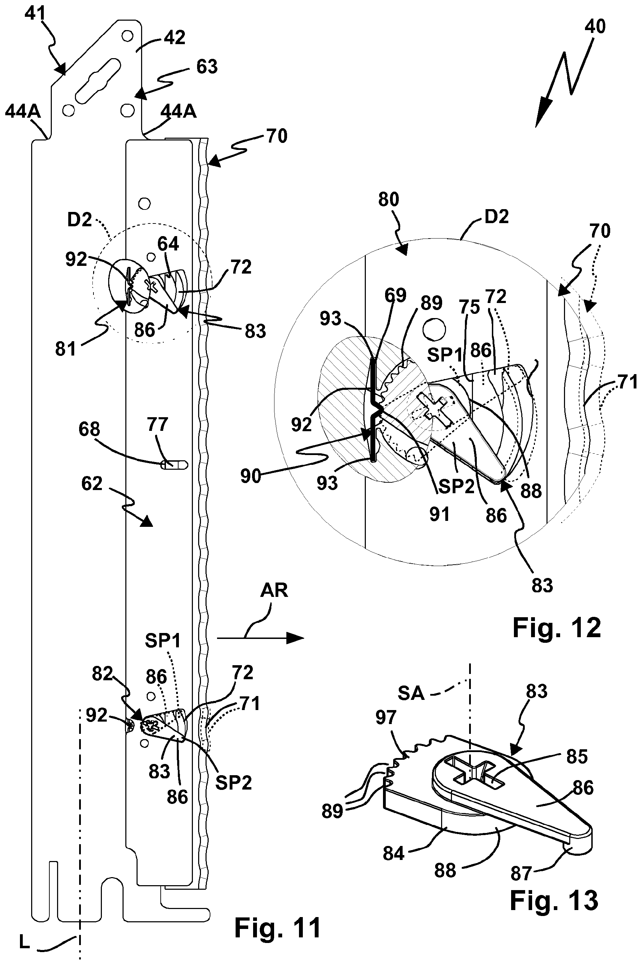

Die Stellglieder 83 weisen Stellarme 86 auf, die radial vom Drehlagerkörper 84 abstehen. Die Stellarme 86 greifen in Stellkulissen 72 des Schneidkörpers 70 ein. Die Stellkulissen 72 verlaufen bogenförmig, jedoch etwas exzentrisch zu den Stellachsen SA. Wenn also Stellkörper 87, die in Radialabstand zu der Stellachse SA von den Stellarmen 86 abstehen und in die Stellkulissen 72 eingreifen, um die Stellachsen SA schwenken, verstellen sie die ortsfeste Schneidkante 72 in Arbeitsrichtung AR nach vorn oder nach hinten, quer zur Längsachse L. In den Figuren 11 und 12 ist dieser Verstellvorgang angedeutet, wobei die nach vorn verstellte Variante in gestrichelten Linien dargestellt ist, während die nach hinten verstellte Position der Schneidkante 71 in durchgezogenen Linien dargestellt ist.

Eine verbesserte Führung für die Stellkörper 87, die man auch als Kulissenfolger oder Kulissenkörper bezeichnen könnte, wird durch Kulissen 96 bereitgestellt, die am Führungskörper 61 vorgesehen sind. Die Stellkörper 87 durchdringen also die Stellkulisse 72 und greifen in die Kulissen 96 ein, wo sie eine weitere Abstützung und Führung erfahren.

Am Drehlagerkörper 84 kann alternativ oder ergänzend zu den Stellkörpern 87 bzw. der damit realisierten Exzentergetriebeanordnung eine Exzenterkontur 88 vorgesehen sein. Beispielsweise stützt sich eine von der ortsfesten Schneidkante 71 abgewandte Rückseite 75 oder Schmalseite des Schneidkörpers 70 an der Exzenterkontur 88 ab, die am Drehlagerkörper 84 vorgesehen ist.

Weiterhin sind die Stellglieder 83 anhand von Rastanordnungen 90 in jeweiligen Stellpositionen, beim Ausführungsbeispiel also Schwenkstellungen oder Drehstellungen, verrastbar. Die Rastanordnungen 90 umfassen Rastkonturen 89 an den Stellgliedern 83, beispielsweise Rastvertiefungen, Zähne oder dergleichen. Vorliegend ist ein über ein Winkelsegment sich erstreckende Zahnanordnung oder Zahnreihe vorgesehen. Die Rastkontur 89 kann mit einer Gegenrastkontur 91 der Rastanordnung 90 verrastet werden, die ortsfest bezüglich des Stützteils 41 ist. Die Gegenrastkontur 91 umfasst beispielsweise einen Rastvorsprung einer Feder 92, die am Stützteil 41 ortsfest angeordnet ist. Die Feder 92 steht beispielsweise mit der Gegenrastkontur 71 in die Aussparung 94 vor, wo sie in die Rastkontur 89 eines jeweiligen Stellgliedes 83 eingreift. Die Feder 92 ist mit ihren Längsenden 93 in Federaufnahmen 69 des Grundkörpers 63 gehalten. Die Federaufnahmen 69 kommunizieren beispielsweise mit der Aussparung 94.

Die Rastkonturen 89 sind beispielsweise an einem Rastarm 97 des Stellgliedes 83 angeordnet. Der Stellarm 86 und der Rastarm 97 stehen beispielsweise einander entgegengesetzt vom Drehlagerkörper 84 ab.

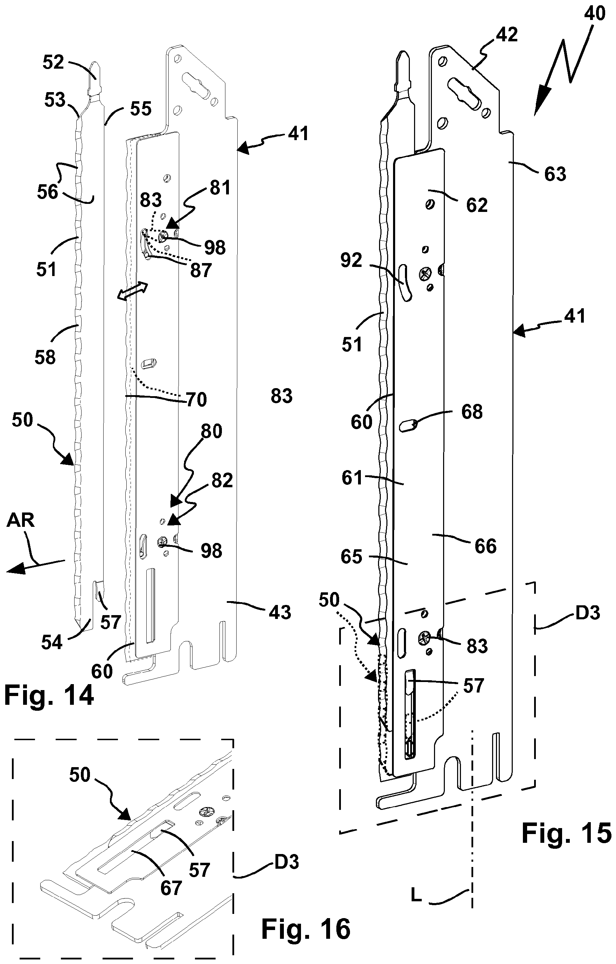

Wie man in Figur 14 erkennen kann, kann auch auf der Seite des Führungskörpers 62 eine Aufnahme 98 in der Art der Aufnahme 85 vorgesehen sein, um das Stellglied 83 zu betätigen. Die Aufnahme 98 ist beispielsweise am Drehlagerkörper 84 eines jeweiligen Stellgliedes 83 angeordnet.

Das Schneidwerkzeug 40 bildet eine Stützeinrichtung 35, mit der das Antriebsaggregat 11 in einem Abstand DI zu einem Führungsschlitten 120 anordenbar und fixierbar ist. Der Führungsschlitten 120 ist auf einem Untergrund entlang führbar, beispielsweise rollbar. Der Führungsschlitten 120 weist einen Schlittenkörper 121, beispielweise in der Art eines Gehäuses, auf. Der Schlittenkörper 121 weist eine Oberseitenwand oder Oberseitenfläche 122 auf, die in Arbeitsrichtung AR nach vorn eine Aufgleitschräge 123 umfasst. Die Oberseitenfläche 122 kann eine Stützfläche oder Führungsfläche oder Auflagefläche oder Gleitfläche für das Werkstück W aufweisen oder bilden. Mit der dem Werkstück W zugewandten Oberseitenfläche 122 kann der Führungsschlitten 120 unter dem Werkstück W hindurch geführt werden, wobei das Werkstück W an der Oberseitenfläche 122 aufliegt oder abgestützt ist. Der Führungsschlitten 120 weist eine Aufgleitschräge 123 auf, die keilartig unter das Werkstück W führbar ist, d.h. das Werkstück W kann auf die Aufgleitschäge 123 aufgleiten und über die Oberseitenfläche 122 hinweg gleiten.

Die Oberseitenfläche 122 ist im Wesentlichen glatt, so dass die Fortbewegung des Führungsschlittens 120 unter dem Werkstück W hindurch dadurch nicht behindert ist. Die Oberseitenfläche 122 ist jedoch auf ihrer Unterseite, d.h. auf der Unterseite des Führungsschlittens 122, verstärkt, nämlich durch eine Rippenstruktur 124. Weiterhin sind unter der Oberseitenfläche 122 Lageraufnahmen 125 für Achsen 126 einer Rollenanordnung 127 vorgesehen. Die Rollenanordnung 127 weist Rollen 128 auf, die seitlich vor den Grundkorpus bzw. den Schlittenkörper 121 vorstehen. Die Achsen 126 stehen beispielsweise vor Seitenwände 126 des Schlittenkörpers 121 vor, wo dann die Rollen 128 drehbar oder fest auf den Achsen 126 angeordnet sind. Die Achsen 126 können fest oder drehbar in den Lageraufnahmen 125 angeordnet sein.

Der Führungsschlitten 120 weist eine Aufnahme 130 für das Schneidwerkzeug 40 auf, insbesondere eine Steckaufnahme, in die der Längsendbereich 43 des Schneidwerkzeugs 40 einsteckbar ist. Die Aufnahme 130 ist vorzugsweise so beschaffen, dass sie eine Vertiefung 130A aufweist, in die der Schneidkörper 50 eintauchen kann. Die Schneidkanten 51 und vorzugsweise 71 erstrecken sich also bis zur Oberseitenfläche 122.

Die Aufnahme 130 bildet einen Bestandteil von Fixiermitteln 131, mit denen der Führungsschlitten 120 und die Stützeinrichtung 35 aneinander fixierbar sind.

Die Fixiermittel 131 umfassen eine Hakenanordnung 132, eine Riegelanordnung 133 sowie eine Klemmanordnung 134. Die Hakenanordnung 132 umfasst beispielsweise einen Hakenvorsprung 135, der in eine Hakenaufnahme an der Aufnahme 133 eingreift. Der Hakenvorsprung 135 erstreckt sich quer zur Längsachse L, beispielsweise in Arbeitsrichtung AR nach vorn. Dementsprechend ist die in Arbeitsrichtung ausgerichtete Aufnahme 130 mit einer Hakenaufnahme 136 ausgestattet, die sich ebenfalls quer zur Längsachse L der Stützeinrichtung 35 und in Arbeitsrichtung AR oder parallel zu einer Längsachse LS des Führungsschlittens 120 erstreckt. Der Hakenvorsprung 135 ist beispielsweise am Grundkörper 63 des Stützteils 41 angeordnet, nämlich unten am freien Längsendbereich 43.

Die solchermaßen mit dem Führungsschlitten 120 verhakte Stützeinrichtung 35 ist zudem noch mit dem Führungsschlitten 120 verklemmbar und verriegelbar, nämlich durch die Riegelanordnung 133 und die Klemmanordung 135.

Die Riegelanordnung 133 umfasst einen Riegel 137, der sich quer zur Längsachse L und somit entlang einer Querachse QS des Führungsschlittens 120 erstreckt. Der Riegel 137 ist zum Eingriff in die Verriegelungsaufnahme 138 des Schneidwerkzeugs 40 vorgesehen.

Parallel zur Querachse QS erstreckt sich weiterhin ein Verriegelungsvorsprung 139 in der Aufnahme 130 zum Eingriff in eine Verriegelungsaufnahme 140 am Stützteil 41. Die Verriegelungsaufnahme 140 und der Hakenvorsprung 135 erstrecken sich rechtwinkelig zueinander. Beispielsweise erstreckt sich der Hakenvorsprung 135 parallel zur Längsachse LS des Führungsschlittens 120. Die Verriegelungsaufnahme 140 rechtwinkelig quer dazu, beispielsweise parallel zur Längsachse L des Stützteils 41.

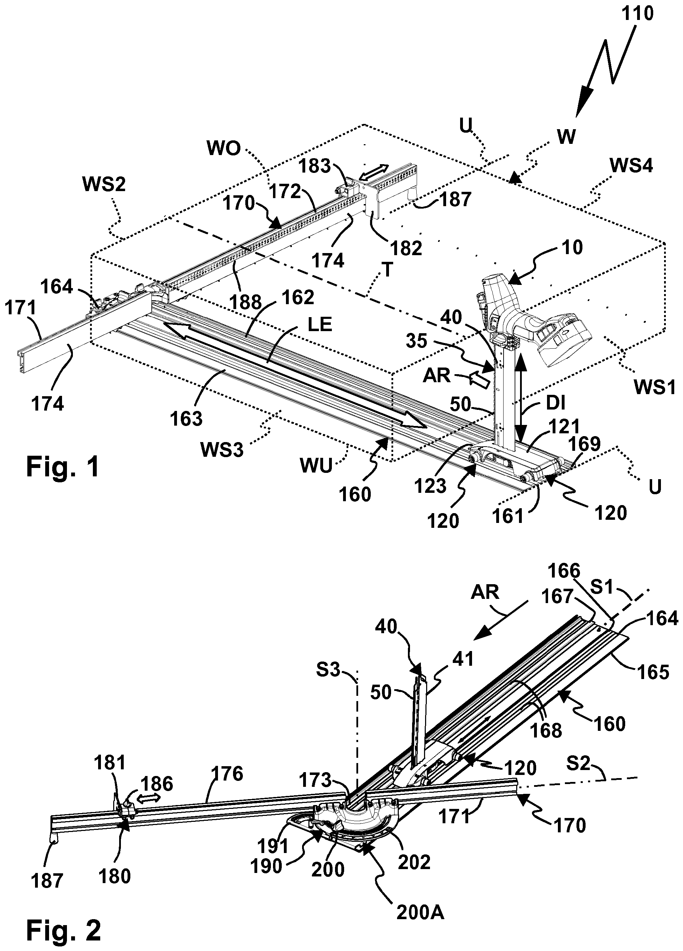

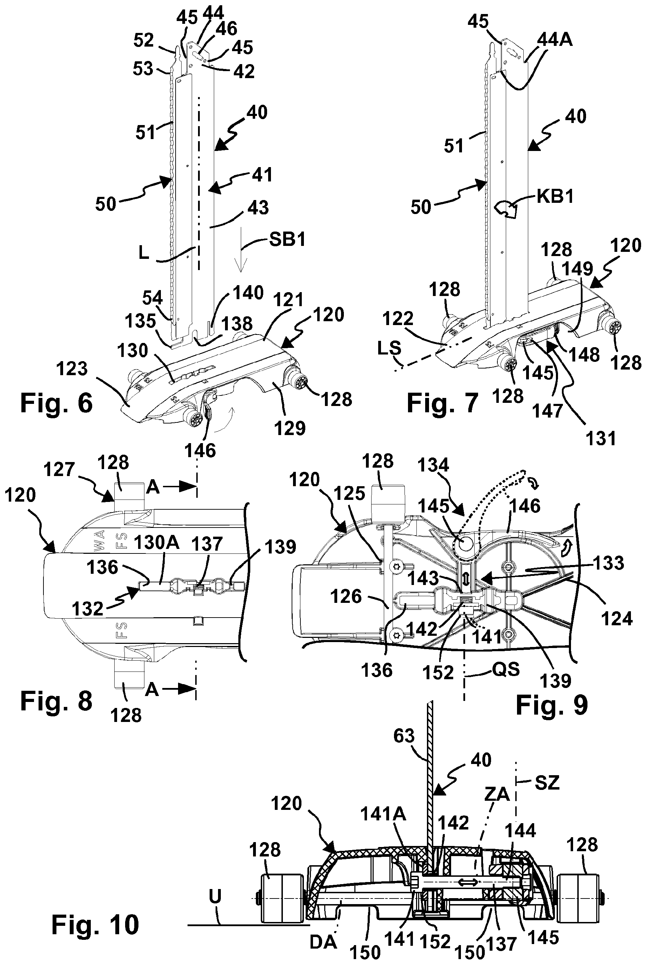

Dadurch ist eine Einsteckbewegung des Schneidwerkzeugs 40 in die Aufnahme 130 beispielsweise derart möglich, dass zunächst der Hakenvorsprung 135 in die Hakenaufnahme 136 eingehakt wird, wobei das Schneidwerkzeug 40 beispielsweise eine leicht geneigte Lage einnimmt, wenn es im Rahmen einer Steckbewegung SB1 in die Aufnahme 130 eingesteckt wird, wobei der Hakenvorsprung 135 in die Hakenaufnahme 136 eingehakt oder untergehakt wird. Anschließend wird das Schneidwerkzeug 40 in eine zur Oberseitenfläche 122 bzw. zum Schlittenkörper 121 rechtwinkelige Lage verstellt oder geschwenkt (siehe Figur 2), was durch eine Schwenkbewegung KB1 in Figur 7 angedeutet ist. Dann greift der Verriegelungsvorsprung 139, der sich quer zur Längsachse der Aufnahme 130 in der Aufnahme 130 erstreckt, in die Verriegelungsaufnahme 140 am Fußbereich oder unteren Längsendbereich 43 des Schneidwerkzeugs 40 ein.

Sodann ist eine Verklemmung möglich. Es greift nämlich in dieser Situation auch der Riegel 137 in die Verriegelungsaufnahme 138 des Schneidwerkzeugs 40 ein. An dieser Stelle sei auch ein sozusagen echtes Verriegelungskonzept erläutert. Beispielsweise könnte die Verriegelungsaufnahme 138 quer zur Längsachse des Riegels 137 eine derartige Außenumfangskontur haben, dass der Riegel 137 nur entlang seiner Längsrichtung aus der Verriegelungsaufnahme 138 herausgezogen oder wieder in diese hineingesteckt werden kann. Dies ist beispielsweise dann der Fall, wenn die Verriegelungsaufnahme 138 sich über mehr als 180 Grad des Außenumfangs des Riegels 137 erstreckt, wenn der Riegel 137 in die Verriegelungsaufnahme 138 eingreift. Der Riegel 137 könnte dann beispielsweise als ein Steckriegel ausgestaltet sein, der entlang einer Steckachse, beispielsweise der Querachse QS, in die Verriegelungsaufnahme 138 eingesteckt wird.

Der Riegel 137 ist an dem Führungsschlitten 120 bezüglich der Querachse QS beweglich aufgenommen.

Der Riegel 137 bildet ferner einen Klemmkörper und/oder Zuganker der Klemmanordnung 134. Ein Kopf 141 des Riegels 137 ist über eine Feder 142 an einem Widerlager 143 abgestützt. Das Stützteil 41, insbesondere der Grundkörper 63, kann zwischen den Kopf 141 und das Widerlager 143 gespannt werden. Die Feder 142 belastet den Kopf 141, mithin also die Klemmanordnung 134, in eine Lösestellung, in der die Stützeinrichtung 35 von dem Führungsschlitten 120 entfernt werden kann. In Gegenrichtung, also in Richtung einer Schließstellung oder Klemmstellung, wirkt der Kopf 141 des Riegels 137, der somit einen Klemmkörper 152 darstellt.

Der Klemmkörper 152 ist anhand eines Hebels 146 zwischen der Lösestellung und der Klemmstellung/Schließstellung der Klemmanordnung 134 betätigbar.

Ein Zugende 144 des Klemmkörpers 152 ist an einem Wellenelement 145 gehalten. Das Wellenelement 145 ist quer zur Querachse QS um eine Schwenkachse SZ schwenkbar an dem Schlittenkörper 121 gelagert. Beispielsweise sind hierfür das Wellenelement 145 aufnehmende Lageraufnahmen oder ist eine Lageraufnahme an dem Schlittenkörper 121 vorgesehen. Das Wellenelement 145 ist zudem in einem Lagerabschnitt 147 eines Hebels 146 aufgenommen. Der Hebel 146 kann anhand des Wellenelements 145 um die Schwenkachse SZ, die rechtwinkelig zur Querachse QS ist, geschwenkt werden. Dadurch wird der Riegel 137 bzw. Zuganker entlang der Querachse QS verlagert, nämlich entlang einer Spannachse ZA verstellt, wodurch der Kopf 141 in Richtung des Widerlagers 143 bewegt wird und das Stützteil 41 zwischen den Kopf 141 und das Widerlager 143 geklemmt ist. Unterhalb des Kopfes 141 kann zudem noch eine Unterlagscheibe 141A vorgesehen sein, um die Kraft des Kopfes 141 besser auf das Stützteil 41 zu übertragen.

Der Hebel 146 weist einen Handgriffabschnitt 148 auf, der vom Lagerabschnitt 147 absteht. Der Hebel 146 kann in die in Figur 9 dargestellte gestrichelte Schwenkstellung verlagert werden, in der der Handgriffabschnitt 148 vom Schlittenkörper 121 absteht, zugleich aber die Klemmanordnung 134 gelöst ist. Wenn der Hebel 146 die in durchgezogenen Linien dargestellte Stellung einnimmt, ist die Klemmanordnung 134 in ihre Klemmstellung verlagert.

Der Hebel 146 ist durch eine seitliche Aussparung 149 am Schlittenkörper 121 bequem bedienbar. Ein Werkzeug ist nicht erforderlich. Gleichwohl ist eine optimale formschlüssige und kraftschlüssige Verbindung zwischen dem Führungsschlitten 120 und dem Schneidwerkzeug 40 realisiert.

Der Führungsschlitten 120 kann mit seinen Rollen 128 direkt auf einem Untergrund U rollen. Bevorzugt ist jedoch eine Führung mit einer Führungsschiene 160, auf der der Führungsschlitten 120 entlangrollen oder entlang gleiten kann. An dieser Stelle sei nämlich erwähnt, dass die Rollenanordnung 127 des Führungsschlittens 120 optional ist. Insbesondere in Zusammenhang mit der Führungsschiene 160 ist auch eine Gleitführung ohne weiteres möglich.

Die Führungsschiene 160 bildet einen Bestandteil eines nachfolgend erläuterten Führungssystems 110:
Die Führungsschiene 160 weist eine Unterseite 161 zum Auflegen auf den Untergrund U auf sowie eine dazu entgegengesetzte Oberseite 162, die eine Führungsfläche 163 für den Führungsschlitten 120 bereitstellt. Der Führungsschlitten 120 kann an der Führungsfläche 163 zwischen Längsenden 164 der Führungsschiene 160 hin und her bewegt werden. Die Führungsschiene 160 weist zwischen den Längsenden 164 eine Längserstreckung LE auf. Die Führungsschiene ist beispielsweise einen Meter, zwei Meter, drei Meter oder dergleichen lang, so dass sie je nach Bedarf unterschiedliche Führungslängen für die Hand-Werkzeugmaschine 10 bereitstellt. Die Längserstreckung LE ist jedenfalls deutlich größer als eine Querbreite der Führungsschiene 160 zwischen Längsschmalseiten 165 der Führungsschiene 160.

An der Führungsfläche 163 der Führungsschiene 160 ist mindestens eine Führungskontur 166 und/oder 167 vorgesehen. Die Führungskonturen 166, 167 verlaufen entlang der Längserstreckung LE der Führungsschiene 160. Die Führungskonturen 166, 167 sind als Führungsrippen ausgestaltet, die vor die Führungsfläche 163 vorstehen.

Der Führungsschlitten 120 hat Führungsgegenkonturen 150 zum Eingriff in die Führungskonturen 166 und/oder 167. Bevorzugt sind die Führungsgegenkonturen 150 symmetrisch zwischen den Rollen 128 oder einem jeweiligen Rollenpaar 128 angeordnet, also symmetrisch zur Querachse QS des Führungsschlittens 120. Somit kann der Führungsschlitten 120 in einander entgegengesetzten Richtungen jeweils mit seiner Vorderseite nach vorn, also mit der Aufgleitschräge 123 nach vorn, auf die Führungsschiene 160 aufgesetzt und an dieser geführt bewegt werden.

Die Führungsgegenkonturen 150 sind an dem Schlittenkörper 121 vorgesehen.

Zudem ist es aber auch möglich, dass der Führungsschlitten 120 zusätzlich zu den Führungsgegenkonturen 150 oder alternativ dazu, d.h. ausschließlich, durch die Rollen 128 geführt ist. Die Rollen 128 können beispielsweise an Führungsgegenkonturen 168 entlanggeführt sein. Die Führungskonturen 166, 167 befinden sich zwischen den Führungskonturen 168. Die Führungskonturen 168 erstrecken sich ebenso wie die Führungskonturen 166, 167 zweckmäßigerweise über die gesamte Längslänge oder die gesamte Längserstreckung LE der Führungsschiene 160.

Das Werkstück W kann mit seiner Unterseite WU auf die Führungsschiene 160 aufgelegt werden, um mit dem Schneidwerkzeug 40 und der Hand-Werkzeugmaschine 10 einen Schnitt in das Werkstück W einzubringen. Ein geplanter Schnitt ist beispielsweise von einer Werkstückseitenfläche WS1 bis zu einer Werkstückseitenfläche WS2, die sich von der Werkstückunterseite WU bis zur Werkstückoberseite WO erstrecken und zwischen Werkstückseiten WS3 und WS4 angeordnet sind, durchzuführen.

Das Werkstück W ist blockartig oder durch einen Block gebildet. Das Werkstück W umfasst beispielsweise einen Dämmstoffblock, wobei verschiedene Materialien möglich sind, beispielsweise Mineralwolle, Schaumstoff oder dergleichen. In allen Fällen sind präzise Sägeschnitte oder Sägeschnitte in das Werkstück W ohne weiteres möglich, wobei die Führungsschiene 160 eine geradlinige, exakte Führung ermöglicht.

Ohne weiteres kann aber der Führungsschlitten 120 auch direkt auf dem Untergrund U rollen und unter das auf dem Untergrund U aufliegende Werkstück W gleiten, sodass beispielsweise freie, insbesondere kurvenförmige oder bogenförmige, Schnitte in das Werkstück W eingebracht werden können. Dabei ist es möglich, dass der Führungsschlitten 120 beispielsweise an einer Führungskante entlang geführt wird, zum Beispiel an einer auf dem Untergrund U aufliegenden Holzlatte oder dergleichen. Mit der Führungsschiene 160 ist jedoch eine wesentlich einfachere und exaktere Schnittführung möglich.

Ein Szenario zur Nutzung der Führungsschiene 160 kann nun vorsehen, dass der Bediener die Hand-Werkzeugmaschine 10 am Handgriffabschnitt 12A ergreift und gleichzeitig das Werkstück W derart fixiert ist, beispielsweise durch eine Hand des Bedieners, dass es frei auf der Führungsschiene 160 liegend mit dem Schneidwerkzeug 40 durchschnitten wird. Der Bediener sichert durch zusätzliche Maßnahmen, beispielsweise durch Ergreifen, durch eine Abstützung mit einem zusätzlichen Gegenstand oder dergleichen, die Position des Werkstücks W bezüglich der Führungsschiene 160, um den geraden, exakten Schnitt durchzuführen. Somit kann beispielsweise der Sägeschnitt T exakt zwischen den Werkstückseiten WS3 und WS4 verlaufen, beispielsweise parallel zu diesen Werkstückseiten oder in einer Winkellage dazu.

Die Handhabung wird aber noch deutlich leichter, wenn eine Seitenanschlageinrichtung 170 eingesetzt wird. Die Seitenanschlageinrichtung 170 umfasst beispielsweise Seitenanschlagabschnitte 171, 172, zwischen denen eine Unterbrechung vorgesehen ist, beispielsweise eine Schneidwerkzeug-Aussparung 173. Zu erwähnen ist, dass die Seitenanschlageinrichtung 170 anders als dargestellt grundsätzlich auch als eine durchgehende, keine Aussparung aufweisende Seitenanschlageinrichtung sein könnte.

Die Seitenanschlageinrichtung 170, insbesondere dessen Seitenanschlagabschnitte 171, 172 und/oder die Führungsschiene 160 sind vorzugsweise Metallprofilkörper, beispielsweise Alu-Profilkörper. Die Führungsschiene 160 und die Seitenanschlageinrichtung 170, insbesondere dessen Seitenanschlagabschnitte 171, 172 können beispielsweise durch Extrusion in an sich bekannter Weise hergestellt werden.

Die Seitenanschlageinrichtung 170 weist eine Seitenanschlagfläche 174 auf, die im Bereich der Schneidwerkzeug-Aussparung 173 unterbrochen ist. Die Seitenanschlagfläche 174 ermöglicht eine flächige, seitliche Anlage, beispielsweise frontale Anlage, des Werkstücks W. Die Seitenanschlagfläche 174 ist schmaler als die Führungsfläche 163. Dennoch kann das Werkstück W gut abgestützt werden.

Die Seitenanschlagabschnitte 171, 172 weisen jeweils eine Führungskontur 175 auf sowie eine Haltekontur 176 auf. Die Führungskontur 175 dient zur Führung einer Queranschlageinrichtung 180, z.B. eines Queranschlagkörpers. Die Queranschlageinrichtung 180 weist eine Anschlagplatte 181, mithin also einen Queranschlagkörper, auf, die eine Queranschlagfläche 182 für das Werkstück W bereitstellt. Die Anschlagplatte 181 ist an einem Führungselement 183, welches man auch als Halteelement bezeichnen kann, angeordnet. Die Anschlagplatte 181 steht von dem Führungselement 183 ab. Die Queranschlagfläche 182 steht vor die Seitenanschlagfläche 174 vor. Die Queranschlageinrichtung 180 kann wahlweise an jedem der Seitenanschlagabschnitte 171, 172 befestigt werden.

Das Führungselement 183 weist einen Umgreifabschnitt 184 auf, der in der Art eines Haltearms vor die Anschlagplatte 181 vorsteht und die Seitenanschlageinrichtung 170 von dessen Vorderseite, also von der Seite mit der Seitenanschlagfläche 174, bis zu dessen Rückseite über dessen von der Führungsschiene 160 abgewandte Schmalseite hinweg umgreift.

An dieser Schmalseite ist eine Haltekontur 176 vorgesehen, in der ein Widerlager 185 der Queranschlageinrichtung 180 oder des Queranschlagkörpers geführt ist. Der Widerlagerkörper ist mit dem Führungselement 183 durch eine Schraube 186 verbunden, von der in der Zeichnung eine Betätigungshandhabe sichtbar ist. Die Betätigungshandhabe ich beispielsweise eine Art Knebel oder Handhebel, kann also manuell ergriffen und vom Bediener betätigt werden. Der Widerlagerkörper 185 ist in der Haltekontur 176 längsverschieblich gelagert. Neben der Haltekontur 176, die sozusagen gleichzeitig eine Führungskontur darstellen kann, sind jedoch auch die vorgenannte Rückseite der Seitenanschlageinrichtung 170 (also der Seitenanschlagabschnitte 171, 172) sowie die obere Schmalseite der Seitenanschlageinrichtung 170 als Führungskonturen 175 vorhanden. Dadurch erfährt die Queranschlageinrichtung 180 eine optimale Längsführung an der Seitenanschlageinrichtung 170.

Es ist also möglich, dass die Queranschlageinrichtung 180 nach Lösen der Schraube 186 in Längsrichtung, also entlang einer Achse S2, der Seitenanschlageinrichtung 170 verschoben wird, um einen gewünschten Längsabstand der Queranschlagfläche 182 zur Längserstreckung LE bzw. zur Längsachse S1 der Führungsschiene 160 herzustellen. Somit kann das auf der Führungsschiene 160 aufliegende Werkstück W beispielsweise mit seiner Werkstückseite WS4 an der Queranschlagfläche 182 flächig anliegen.

Die Queranschlagfläche 182 verläuft winkelig, vorliegend rechtwinkelig, zur Seitenanschlagfläche 170. Andere Winkelstellungen sind möglich, wenn beispielsweise die Queranschlagfläche 182 schwenkbar an dem Führungselement 183 vorgesehen ist. Dazu kann beispielsweise ein Schwenklager am Führungselement 183 vorgesehen sein, so dass die Queranschlagfläche beweglich ist. Selbstverständlich ist es möglich, hier beliebige Schwenkachsrichtungen vorzusehen, beispielsweise eine Schwenkachsrichtung senkrecht zur Seitenanschlagfläche 174, aber auch eine Schwenkachse, die parallel zur Seitenanschlagfläche 174, insbesondere durch die Seitenanschlagfläche 174 hindurch, verläuft.

Nun kann eine in der Zeichnung nicht dargestellte Ausführungsform vorsehen, dass die Seitenanschlageinrichtung 170 in einer festen Winkelstellung an der Führungsschiene 160 montiert oder montierbar ist. Beispielsweise kann die Führungsschiene 160 mit der Seitenanschlageinrichtung 170 anhand einer Schraubverbindung, Schweißverbindung oder dergleichen dauerhaft verbunden sein.

Bevorzugt ist jedoch eine Winkelverstellbarkeit der Seitenanschlageinrichtung 170 relativ zur Führungsschiene 160 um eine zur Längserstreckung LE bzw. Längsachse S1 der Führungsschiene 160 winkelige Achse, beispielsweise um eine Schwenkachse S3, und/oder eine Längsverschieblichkeit der Seitenanschlageinrichtung 170 bezüglich der Längserstreckung LE oder Längsachse S1 der Führungsschiene 160.

Die Seitenanschlageinrichtung 170 ist anhand einer Halteeinrichtung 190 an der Führungsschiene 160 gehalten.

Die Halteeinrichtung 190 weist einen Schlitten 191 auf, der in Bezug auf die Längserstreckung LE der Führungsschiene 160, mithin also die Längsachse S1, verschieblich an der Führungsschiene 160 gelagert ist. Der Schlitten 191 umfasst einen Schlittenkörper 192, beispielsweise in der Art einer Platte. Der Schlittenkörper 192 hat eine Flachgestalt. Der Schlittenkörper 192 steht kaum oder nur unwesentlich über die Oberseite 162 der Führungsschiene 160 vor. Der Schlittenkörper oder Schlitten 191 ist anhand eines Gleitkörpers 178 an der Führungsschiene 160 geführt. Der Gleitkörper 178 ist in einer Führungskontur 177 der Führungsschiene 160 gleitverschieblich aufgenommen, so dass er in Richtung der Längserstreckung LE bzw. parallel dazu ein der Führungsschiene 160 bewegt werden kann und geführt ist. Der Gleitkörper 178 weist eine Längsgestalt auf. Der Gleitkörper 178 ist beispielsweise in der Art eines Nutensteins ausgestaltet. Der Gleitkörper 178 kann zur Oberseite 162 der Führungsschiene 160 nicht aus der Führungskontur 177 heraus bewegt werden. Die Führungskontur 177 ist an ihrer von der Oberseite 162 der Führungsschiene 160 abgewandten Seite bis auf einen Schlitz geschlossen, der von Verbindungskörpern 193, 194 durchdrungen ist oder durchdringbar ist.

Die Verbindungskörper 193, 194 dienen zur Verbindung des Schlittens 191 mit dem Gleitkörper 178 und weisen einen Längsabstand bezüglich der Längsachse oder Längserstreckung des Gleitkörpers 178 auf. Die Verbindungskörper 193, 194 sind beispielsweise in der Art von Verbindungsbolzen, Verbindungsstiften oder dergleichen ausgestaltet. Die Verbindungskörper 193, 194 sind vorzugsweise in den Gleitkörper 178 eingeschraubt. Dazu hat der Gleitkörper 178 Schraubaufnahmen 179.

Der Verbindungskörper 193 greift in eine Kulisse 195 ein. Die Kulisse 195 dient zur Führung, insbesondere Drehführung, des Schlittens 191 bezüglich der Führungsschiene 160. Zudem sorgt der Verbindungskörper 193 für die Kopplung zwischen Schlitten 191 und Gleitkörper 178.

Der Verbindungskörper 194 ist als Fixierkörper vorgesehen. Am Verbindungskörper 194 ist beispielsweise ein Klemmabschnitt 196 angeordnet, der durch eine Betätigungshandhabe 197, beispielsweise eine Hebel betätigbar ist. Dadurch ist eine Klemmeinrichtung gebildet. Durch Betätigung des Verbindungskörpers 194 in eine Klemmstellung, beispielsweise anhand des als Hebel ausgestalteten Betätigungshandhabe 197 oder durch eine Knebelschraube 197B, gelangt der Klemmabschnitt 196 in eine Klemmstellung, in der er einen kleineren Abstand zu dem Gleitkörper 178 hat und somit der Schlittenkörper 192 zwischen den Klemmabschnitten 196 und die Führungsschiene 160 geklemmt ist. Wenn jedoch die Betätigungshandhabe 197 in die Lösestellung verstellt wird, beispielsweise der Hebel aus der in Figur 2 sichtbaren Stellung ausgeschwenkt wird, in der er vor den Schlitten 191 vorsteht, ist die Verklemmung freigegeben, d.h. der Schlitten 191 kann um eine Längsachse des Verbindungskörpers 194 definierte Schwenkachse SL geschwenkt werden.

Die Kulisse 195 verläuft bogenförmig um die Schwenkachse SL, so dass der für die Schwenkbewegung freigegebene Schlitten 191 um die Schwenkachse SL schwenken kann und dabei zudem noch durch den in diesem Fall einen Kulissenfolger für die Kulisse 195 gebildeten Verbindungskörper 193 geführt ist.

Denkbar wäre eine Konstruktion, bei der der Schlitten 191 zwar in Bezug auf die Längserstreckung LE verschieblich an der Führungsschiene 160 gelagert ist, jedoch nicht unbedingt um eine Schwenkachse bezüglich der Führungsschiene schwenken kann.

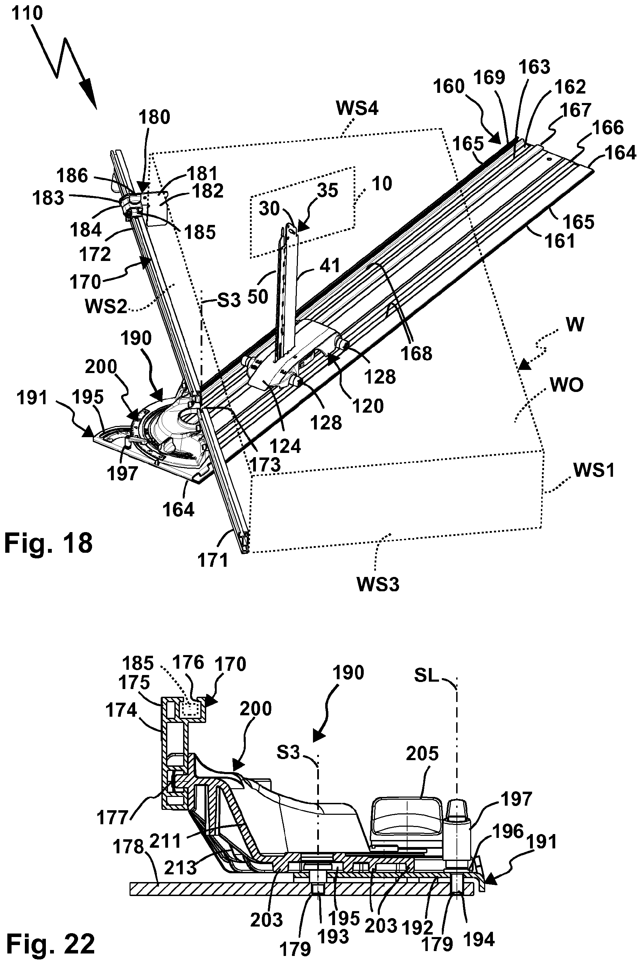

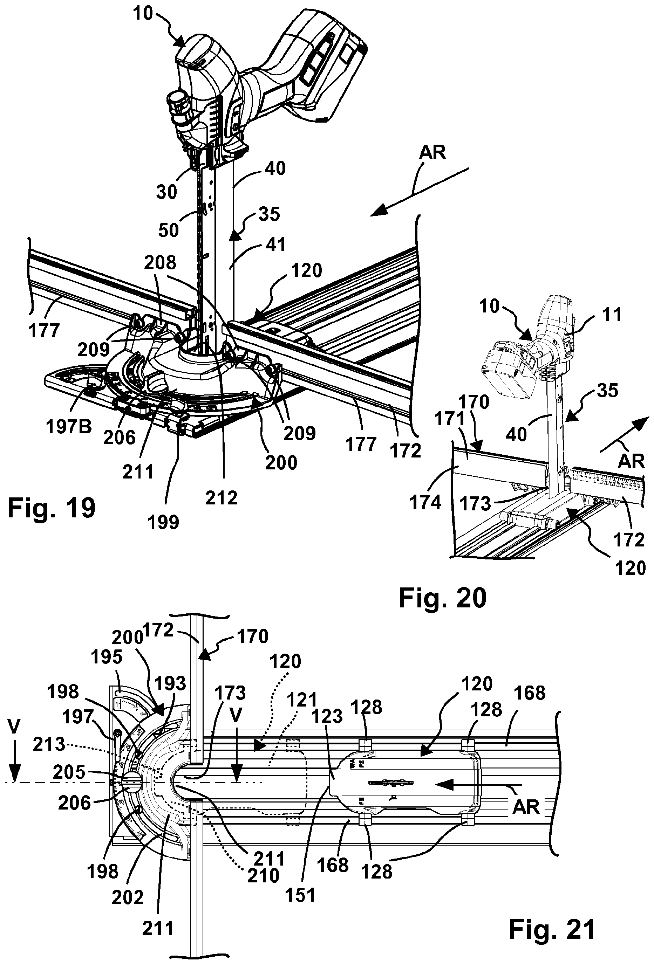

Zur Fixierung des Schlittens 191 an der Führungsschiene 160 können weitere Haltemittel vorgesehen sein, beispielsweise eine oder mehrere Halteklemmen 199, mit denen der Schlitten 191 insbesondere dann verklemmbar oder fixierbar ist, wenn der Schlitten 191 seine in Figur 18, 19 dargestellte Gebrauchsstellung einnimmt, also von der Führungsschiene 160 um die Schwenkachse SL weggeschwenkt ist und sich an einem der Längsende in 164 befindet. Eine Halteklemme 199 umfasst beispielsweise eine Halteklammer und/oder eine Klemmschraube und ist beispielhaft in Figur 19 dargestellt.

Die Halteeinrichtung 190 umfasst weiterhin eine Schwenkhalterung 200, die um die Schwenkachse S1 schwenkbar am Schlitten 191 und somit schwenkbar bezüglich der Führungsschiene 160 gelagert ist. Die Schwenkhalterung 200 und der Schlitten 191 bilden insgesamt ein Schwenklager 200A. Die Schwenkhalterung 200 umfasst einen Haltekörper 201, der am Schlitten 191 schwenkbar gelagert ist. Der Haltekörper 201 hat einen Schwenkabschnitt 202, der plattenartig ausgestaltet ist. Der Schwenkabschnitt 202 liegt mit seiner Flachseite oder Unterseite auf dem Schlittenkörper 192 auf. Zur besseren Verdrehbarkeit bzw. Beweglichkeit des Haltekörpers 201 bezüglich des Schlittens 191 können Stützvorsprünge 203 vorgesehen sein, die in einer oder mehreren Schwenkstellungen bezüglich der Schwenkachse S3 auf der Oberseite bzw. der von der Führungsschiene 160 abgewandten Seite des Schlittenkörpers 192 abgestützt sind.

Am Schwenkabschnitt 202 ist eine Führungskulisse 204 vorgesehen. Die Führungskulisse 204 erstreckt sich bogenförmig um die Schwenkachse S3. In die Führungskulisse 204 greifen Führungskörper 198, beispielsweise Kulissenfolger, ein. Die Führungskörper 198 stehen parallel zur Schwenkachse S3 vor den Schlitten 191 zu der Schwenkhalterung 200 vor. Beispielsweise handelt es sich bei den Kulissenfolgern oder Führungskörpern 198 um Bolzen und/oder Schrauben, die die Führungskulisse 204 durchdringen vorteilhaft ist vorgesehen, dass Köpfe der Schrauben auf der von dem Schlitten 191 abgewandten Seite vor die Führungskulisse 204 seitlich vorstehen.

Zur Fixierung der Schwenkhalterung 200 bezüglich des Schlittens 191 dient ein Klemmelement 205. Das Klemmelement 205 umfasst beispielsweise eine Betätigungshandhabe 206, insbesondere einen Hebel oder wie im Ausführungsbeispiel einen Knebel einer Schraube. Das Klemmelement 205 durchdringt die Führungskulisse 204 und ist beispielsweise in der Art eines Schraubbolzens ausgestaltet. Das Klemmelement ist vorzugsweise in den Schlittenkörper 192 eingeschraubt oder mit diesem verschraubbar. Wenn das Klemmelement 205 seine Spannstellung einnimmt, drückt beispielsweise die Betätigungshandhabe 206 seitlich neben der Führungskulisse 204 auf den Schwenkabschnitt 202 und beaufschlagt diesen somit gegen den Schlitten 191.

Von dem Schwenkabschnitt 202 und beaufschlagt diesen somit gegen den Schlitten 191.

Von dem Schwenkabschnitt 202 steht ein Tragabschnitt 207 ab, an dem die Seitenanschlageinrichtung 170 befestigt ist. Der Tragabschnitt 207 umfasst Haltebereiche 208, die seitlich neben der Schneidwerkzeug-Aussparung 173 angeordnet sind. An jedem der Haltebereiche 208 kann ein Seitenanschlagabschnitt 171, 172 befestigt werden, beispielsweise anhand von einer Schraube 209, die direkt die Seitenanschlageinrichtung 170, beispielsweise die Profile der Seitenanschlagabschnitte 171, 172 eingeschraubt sind. Vorliegend sind jedoch die Schrauben 209 in in der Zeichnung nicht sichtbare Widerlagerkörper, insbesondere Kulissensteine oder dergleichen, eingeschraubt, die in einer insbesondere als Nut ausgestalteten Halteaufnahme 177 eines jeweiliges Seitenanschlagabschnitts 171, 172 oder der Seitenanschlageinrichtung 170 eingreifen oder dort aufgenommen sind. Die Halteaufnahme 177 ist beispielsweise als eine Längsnut ausgestaltet, die Halteaufnahme 177 befindet sich an der von der Seitenanschlagfläche 174 abgewandten Rückseite eines jeweiligen Seitenanschlagabschnitts 171, 172.

Der Tragabschnitt 207 ist beispielsweise domartig oder halbdomartig ausgestaltet. Er begrenzt eine Führungsschlitten-Aussparung 210, in die der Führungsschlitten 120 bei einer Bewegung in Arbeitsrichtung AR nach vorn eingreifen kann. Der Tragabschnitt 207 weist beispielsweise eine Seitenwand 211, die man auch als eine Domwand bezeichnen könnte auf, die eine Kavität für die Führungsschlitten-Aussparung 210 begrenzt. In diese Kavität kann der Führungsschlitten 120 eintauchen oder eingreifen.

Weiterhin hat die Seitenwand 211 zwischen den Seitenanschlagabschnitten 171, 172 eine Aussparung 212, die man auch als eine Schneidwerkzeug-Aussparung bezeichnen kann. Wenn als der Schlitten 120 soweit in Arbeitsrichtung AR vorbewegt wird, dass er das an der Seitenanschlagfläche 174 das Werkstück WS vollständig durchschnitten hat, mithin also das Schneidwerkzeug 40 sozusagen aus der Werkstückseitenwand oder Werkstückseite WS2 austaucht, ist der Führungsschlitten 120 in der Führungsschlitten-Aussparung 210 mit seinem vorderen Abschnitt aufgenommen. Zudem greift das Schneidwerkzeug 40 in die Schneidwerkzeug-Aussparung 173 ein.

Es ist vorteilhaft, wenn der Führungsschlitten 120, beispielsweise mit seiner Vorderseite 151 und/oder der Aufgleitschräge 123, an einem Anschlag 213 der Schwenkhalterung 200 oder der Halteeinrichtung 190 anschlägt, wenn das Schneidwerkzeug 40 mit seinen Schneidkanten 51, 71 eine durch die Seitenanschlagfläche 174 definierte Ebene durchdrungen hat. Beispielsweise schlägt der Führungsschlitten 120 an einem Anschlag 213 im Innenraum der Führungsschlitten-Aussparung 210 in dieser Situation an. Somit können die Schneidkanten des Schneidwerkzeugs 40, beispielsweise die Schneidkanten 51, 71, nicht am Boden der Schneidwerkzeug-Aussparung 173, insbesondere der Aussparung 212, anschlagen und dadurch beschädigt werden.

Durch die sozusagen doppelte Schwenkbeweglichkeit der Seitenanschlageinrichtung 170 bezüglich der Führungsschiene 160, nämlich des Schlittens 191 bezüglich der Führungsschiene 160 und zudem der Schwenkhalterung 200 bezüglich des Schlittens 191 ist ein leichtes Verstellen aus einer Gebrauchsstellung GS in eine Transportposition TS möglich. In der Gebrauchsstellung GS steht die Seitenanschlageinrichtung 170 quer vor die Führungsschiene 160 vor. In der Transportposition TS hingegen fluchten die Führungsschiene 160 und die Seitenanschlageinrichtung 170.

In einem Bewegungsabschnitt B1 wird beispielsweise zunächst der Schlitten 191 in eine mit der Führungsschiene 160 im Wesentlichen fluchtende Transportposition verstellt, nämlich um die Schwenkachse SL verschwenkt. Zudem wird die Schwenkhalterung 200 und die Schwenkachse S3 derart verstellt, dass die Seitenanschlagfläche 174 zur Längsachse S1 oder Längserstreckung LE der Führungsschiene 160 parallel ist. In einem Bewegungsabschnitt B2 schließlich wird der Schlitten 191 entlang der Führungsschiene 160 so verstellt, dass die Längsenden der Seitenanschlageinrichtung 170 nicht vor die Längsenden 164 der Führungsschiene 160 vorstehen. Dadurch ist eine kompakte, leicht transportierbare Konstellation erzielt.

An der Queranschlageinrichtung 180 kann eine Skala 188, beispielsweise eine Zentimeter-Bemaßung, vorgesehen sein, um die jeweilige Position der Queranschlageinrichtung 180 einzustellen. Weiterhin ist es vorteilhaft, wenn von der Seitenanschlageinrichtung 170, beispielsweise dem Seitenanschlagabschnitt 171, ein Stützkörper 187 absteht. Der Stützkörper 187 dient beispielsweise zum Abstützen eines jeweiligen Längsendbereichs einer der Seitenanschlagabschnitte 171 und/oder 172 auf dem Untergrund U.

## Patentansprüche

1. Führungssystem (110) umfassend eine auf einen Untergrund (U) auflegbare Führungsschiene (160) und einen zum Führen einer Hand-Werkzeugmaschine (10) vorgesehenen Führungsschlitten (120), wobei die Führungsschiene (160) mindestens eine sich entlang ihrer Längserstreckung (LE) erstreckende Führungskontur (166) zum Führen des Führungsschlittens (120) aufweist, wobei der Führungsschlitten (120) einen Bestandteil der Hand-Werkzeugmaschine (10) bildet oder anhand von Verbindungsmitteln mit der Hand-Werkzeugmaschine (10) verbindbar ist, wobei die Hand-Werkzeugmaschine (10) ein Antriebsaggregat (11) zum Antreiben eines mindestens einen Schneidkörper (50) aufweisenden Schneidwerkzeugs (40) aufweist, welches zum Einschneiden in ein Werkstück (W) entlang einer Arbeitsrichtung (AR) vorgesehen ist, **dadurch gekennzeichnet, dass** das Führungssystem (110) eine mit dem Führungsschlitten (120) verbundene oder anhand von Fixiermitteln (131) lösbar verbindbare Stützeinrichtung (35) zum Stützen des Antriebsaggregats (11) der Hand-Werkzeugmaschine (10) in einem zum Auflegen des Werkstücks (W) auf die Führungsschiene (160) vorgesehenen Abstand zu dem Führungsschlitten (120) aufweist, sodass das Schneidwerkzeug (40) in dem Abstand zwischen der Führungsschiene (160) und dem Antriebsaggregat (11) zum Einschneiden in das auf der Führungsschiene (160) aufliegende Werkstück (W) angeordnet ist.

2. Führungssystem (110) nach Anspruch 1, **dadurch gekennzeichnet, dass** die Stützeinrichtung (35) einen Bestandteil des Schneidwerkzeugs (40) bildet und/oder eine Führung für das Schneidwerkzeug (40) bildet und/oder durch das Schneidwerkzeug (40) gebildet ist.

3. Führungssystem nach Anspruch 1 oder 2, **dadurch gekennzeichnet, dass** die Stützeinrichtung (35) ein eine Längsgestalt aufweisendes Stützteil (41) zum Abstützen des Antriebsaggregats (11) der Hand-Werkzeugmaschine (10) an dem Führungsschlitten (120) aufweist, wobei ein erster Längsendbereich (53) des Stützteils (41) die Verbindungsmittel zur Verbindung mit dem Antriebsaggregat (11) aufweist oder mit dem Antriebsaggregat (11) verbunden ist und ein dem ersten Längsendbereich entgegengesetzter zweiter Längsendbereich (54) des Stützteils (41) mit dem Führungsschlitten (120) verbunden oder anhand der Fixiermittel (131) lösbar mit dem Stützteil (41) verbindbar ist, und wobei der mindestens eine Schneidkörper (50) des Schneidwerkzeugs (40) neben dem Stützteil (41) oder an dem Stützteil (41) angeordnet, insbesondere geführt, ist.

4. Führungssystem nach Anspruch 3, **dadurch gekennzeichnet, dass** eine Querbreite des Stützteils (41) quer zu der Arbeitsrichtung (AR) maximal das Zweifache, insbesondere maximal das 1,5-fache, einer Querbreite des Schneidkörpers (50) beträgt, und/oder dass der Führungsschlitten (120) mit einem einzigen Stützteil (41) mit einander verbunden oder verbindbar sind und/oder dass in einer Arbeitsrichtung (AR) der Hand-Werkzeugmaschine (10) kein Zwischenraum zwischen dem Stützteil (41) und dem Schneidkörper (50) vorhanden ist.

5. Führungssystem nach einem der vorhergehenden Ansprüche, **dadurch gekennzeichnet, dass** die Fixiermittel (131) zur lösbaren Verbindung der Stützeinrichtung (35) mit dem Führungsschlitten (120) eine Hakenanordnung (132) und/oder eine Riegelanordnung (133) und/oder eine Klemmanordnung (134) und/oder einen Kniehebel und/oder einen Klemmhebel (146) aufweisen.

6. Führungssystem nach einem der vorhergehenden Ansprüche, **dadurch gekennzeichnet, dass** die Stützeinrichtung (35), insbesondere ein Stützteil (41) der Stützeinrichtung (35), eine wandartige oder blattartige Gestalt aufweist.

7. Führungssystem nach einem der vorhergehenden Ansprüche, **dadurch gekennzeichnet, dass** der Führungsschlitten (120) eine in Gebrauchslage von der Führungsschiene (160) abgewandte Oberseitenfläche (122) aufweist und sich der mindestens eine Schneidkörper (50) bis zu der Oberseitenfläche (122) erstreckt oder in eine an der Oberseitenfläche (122) angeordnete Vertiefung (130A) eingreift und/oder dass der Führungsschlitten (120) eine Rollenanordnung (128) zum Rollen auf dem Untergrund (U) und/oder der Führungsschiene (160) aufweist und/oder dass der Führungsschlitten (120) mindestens eine, insbesondere von einer Rollenanordnung (128) separate, Führungsgegenkontur (150), insbesondere eine Führungsnut, zum Führen an der Führungskontur (166) der Führungsschiene (160) aufweist und/oder dass der Führungsschlitten (120) an seiner in Arbeitsrichtung (AR) des Schneidwerkzeugs (40) vorn angeordneten, insbesondere in Arbeitsrichtung (AR) vor dem Schneidwerkzeug (40) angeordneten, Vorderseite eine Aufgleitschräge oder Aufgleitkontur zum Aufgleiten des Werkstücks (W) auf den Führungsschlitten (120) aufweist.

8. Führungssystem nach einem der vorhergehenden Ansprüche, **dadurch gekennzeichnet, dass** es eine Seitenanschlageinrichtung (170) mit einer zur seitlichen Anlage an dem Werkstück (W) vorgesehenen Seitenanschlagfläche (174) und eine Halteeinrichtung (190) zur Verbindung der Seitenanschlageinrichtung (170) mit der Führungsschiene (160) in mindestens einer Winkelposition relativ zu der Führungsschiene (160) umfasst.

9. Führungssystem nach Anspruch 8, **dadurch gekennzeichnet, dass** an der Seitenanschlageinrichtung (170) und/oder der Halteeinrichtung (190) eine Schneidwerkzeug-Aussparung (173) und/oder eine Führungsschlitten-Aussparung (210) angeordnet ist, wobei das Schneidwerkzeug (40) in die Schneidwerkzeug-Aussparung (173) oder der Führungsschlitten (120) in die Führungsschlitten-Aussparung (210) bei einer Bewegung des Führungsschlittens (120) entlang der Längserstreckung (LE) der Führungsschiene (160) in Richtung der Seitenanschlagfläche (174) eintauchen können, und/oder dass die Halteeinrichtung (190) einen Schlitten (191) aufweist, der an der Führungsschiene (160) in deren Längserstreckung (LE), insbesondere an der mindestens einen Führungskontur (166), geführt ist.

10. Führungssystem nach Anspruch 9, **dadurch gekennzeichnet, dass** der Schlitten (191) eine Fixiereinrichtung aufweist, mit der der Schlitten (191) in mindestens zwei Längspositionen bezüglich der Längserstreckung (LE) der Führungsschiene (160) an der Führungsschiene (160) fixierbar, insbesondere verklemmbar ist, und/oder dass der Schlitten an der Führungsschiene (160) schwenkbar gelagert ist, insbesondere zur Verstellung der Seitenanschlageinrichtung (170) in eine mit der Führungsschiene (160) fluchtende Transportposition (TS) und/oder zur Einstellung der Winkelposition der Seitenanschlageinrichtung (170) bezüglich der Führungsschiene (160).

11. Führungssystem nach einem der Ansprüche 8 bis 10, **dadurch gekennzeichnet, dass** die Halteeinrichtung (190) ein Schwenklager (200A) aufweist, sodass die Seitenanschlageinrichtung (170) an der Führungsschiene (160) um eine insbesondere zu der Längserstreckung (LE) der Führungsschiene (160) senkrechte Schwenkachse schwenkbar gelagert ist, wobei vorteilhaft vorgesehen ist, dass das Schwenklager (200A) an dem an der Führungsschiene (160) geführten Schlitten (191) angeordnet ist.

12. Führungssystem nach einem der Ansprüche 8 bis 11, **dadurch gekennzeichnet, dass** die Seitenanschlageinrichtung (170) eine Längsgestalt aufweist, insbesondere als ein Führungslineal ausgestaltet ist, und/oder dass eine Längslänge der Seitenanschlageinrichtung (170) mindestens 50 %, vorzugsweise mindestens 80 %, der Längslänge der Führungsschiene (160) entspricht.

13. Führungssystem nach einem der Ansprüche 8 bis 12, **dadurch gekennzeichnet, dass** es eine an der Seitenanschlageinrichtung (170) angeordnete oder anordenbare Queranschlageinrichtung (180), insbesondere einen Queranschlagkörper, aufweist, die eine zu der Seitenanschlagfläche (174) winkelige Queranschlagfläche (182) für das Werkstück (W) aufweist, wobei vorteilhaft vorgesehen ist, dass die Queranschlageinrichtung (180) an der Seitenanschlageinrichtung (170) bezüglich deren Längserstreckung (LE) geführt ist und/oder anhand von Fixiermitteln, insbesondere einer Klemmeinrichtung, lösbar fixierbar angeordnet ist.

14. Führungssystem nach einem der vorhergehenden Ansprüche, **dadurch gekennzeichnet, dass** das Schneidwerkzeug (40) ein mit dem Antriebsaggregat (11) der Hand-Werkzeugmaschine (10) anhand der Verbindungsmittel verbundenes oder verbindbares Stützteil (41) aufweist, das eine Längsgestalt aufweist und sich entlang einer Längsachse (L) erstreckt, wobei der Schneidkörper (50) des Schneidwerkzeugs (40) durch das Antriebsaggregat (11) der Hand-Werkzeugmaschine (10) antreibbar und an einer Linearführung (60A) des Stützteils (41) gelagert ist.

15. Führungssystem nach einem der vorgehenden Ansprüche, **dadurch gekennzeichnet, dass** der Schneidkörper (50) nicht vor den Führungsschlitten (120) an seiner von der Hand-Werkzeugmaschine (10) abgewandten Seite vorsteht.

## Claims

1. Guide system (110) comprising a guide rail (160) which can be placed on a ground and a guide carriage (120) suitable for guiding a hand-operated power tool (10), wherein the guide rail (160) has at least one guide contour (166) extending along its longitudinal dimension (LE) for guiding the guide carriage (120), wherein the guide carriage (120) forms a part of the hand-operated power tool (10) or can be joined to the hand-operated power tool (10) using connecting means, wherein the hand-operated power tool (10) has a drive assembly (11) for driving a cutting tool (40) having a cutting body (50) and provided for cutting into a workpiece (W) along a working direction (AR), **characterised in that** the guide system (110) has a supporting device (35) connected to the guide carriage (120) or releasably connectable thereto using fixing means (131) for supporting the drive assembly (11) of the hand-operated power tool (10) at a distance from the guide carriage (12) provided for placing the workpiece (W) on the guide rail (160), so that the cutting tool (40) is located in the gap between the guide rail (160) and the drive assembly (11) for cutting into the workpiece (W) lying on the guide rail (160).

2. Guide system (110) according to claim 1, **characterised in that** the supporting device (35) forms a part of the cutting tool (40) and/or a guide for the cutting tool (40) and/or is represented by the cutting tool (40).

3. Guide system according to claim 1 or 2, **characterised in that** the supporting device (35) has a supporting part (41) with an oblong shape for supporting the drive assembly (11) of the hand-operated power tool (10) on the guide carriage (120), wherein a first longitudinal end region (53) of the supporting part (41) has the connecting means for joining to the drive assembly (11) or is joined to the drive assembly, and a second longitudinal end region (54) opposite the first longitudinal end region is joined to the guide carriage (120) or can be releasably joined to the supporting part (41) using the fixing means (131), and wherein the at least one cutting body (50) of the cutting tool (40) is located adjacent to the supporting part (41) or at the supporting part (41), being guided in particular.

4. Guide system according to claim 3, **characterised in that** a transverse width of the supporting part (41) transversely to the working direction (AR) is no more than twice, in particular no more than 1.5 times, a transverse width of the cutting body (50), and/or **in that** the guide carriage (120) is connected or connectable to a single supporting part (41), and/or **in that** in one working direction (AR) of the hand-operated power tool (10) there is no gap between the supporting part (41) and the cutting body (50).

5. Guide system according to any of the preceding claims, **characterised in that** the fixing means (131) for the releasable connection of the supporting device (35) to the guide carriage (120) have a hook assembly (132) and/or a latch assembly (133) and/or a clamping assembly (134) and/or a toggle lever and/or a clamping lever (146).

6. Guide system according to any of the preceding claims, **characterised in that** the supporting device (35), in particular the supporting part (41) of the supporting device (35), has a wall-like or leaf-like shape.

7. Guide system according to any of the preceding claims, **characterised in that** the guide carriage (120) has a top surface (122) averted from the guide rail (160) in the position of use, and **in that** the at least one cutting body (50) extends to the top surface (122) or engages with a recess (130A) located at the top side surface (122), and/or **in that** the guide carriage (120) has a roller assembly (128) for rolling on the ground (U) and/or on the guide rail (160), and/or **in that** the guide carriage (120) has at least one guide mating contour (150), in particular a guide groove, separate from a roller assembly (128), for guidance at the guide contour (166) of the guide rail (160), and/or **in that** the guide carriage (120) has on its front side located at the front in the working direction (AR) of the cutting tool (40), in particular in front of the cutting tool (40) in the working direction (AR), a slide-on chamfer or slide-on contour for sliding the workpiece (W) onto the guide carriage (120).

8. Guide system according to any of the preceding claims, **characterised in that** it comprises a lateral stop device (170) with a lateral stop surface (174) provided for lateral contact with the workpiece (W) and a holding device (190) for joining the lateral stop device (170) to the guide rail (160) in at least one angular position relative to the guide rail (160).

9. Guide system according to claim 8, **characterised in that** a cutting tool recess (173) and/or a guide carriage recess (210) are/is located at the lateral stop device (170) and/or the holding device (190), wherein the cutting tool (40) can dip into the cutting tool recess (173) or the guide carriage (120) can dip into the guide carriage recess (210) at a movement of the guide carriage (120) along the longitudinal dimension (LE) of the guide rail (160) towards the lateral stop surface (174), and/or **in that** the holding device (190) has a slide (191) guided at the guide rail (160) along the longitudinal dimension (LE) thereof, in particular at the at least one guide contour (166).

10. Guide system according to claim 9, **characterised in that** the slide (191) has a fixing device with which the slide (191) can be fixed, in particular clamped, to the guide rail (160) in at least two longitudinal positions with respect to the longitudinal dimension (LE) of the guide rail (160), and/or **in that** the slide is pivotably mounted at the guide rail (160), in particular for moving the lateral stop device (170) into a transport position aligned to the guide rail (160), and/or for adjusting the angular position of the lateral stop device (170) with respect to the guide rail (160).

11. Guide system according to any of claims 8 to 10, **characterised in that** the holding device (190) has a swivel bearing (200A), so that the lateral stop device (170) is mounted at the guide rail (160) for pivoting about a pivot axis which is in particular perpendicular to the longitudinal dimension (LE) of the guide rail (160), wherein it is advantageously provided that the swivel bearing (200A) is located at the slide (191) guided at the guide rail (160).

12. Guide system according to any of claims 8 to 11, **characterised in that** the lateral stop device (170) has an oblong shape, being designed as a guide ruler in particular, and/or **in that** a longitudinal length of the lateral stop device (170) corresponds to at least 50%, preferably at least 80%, of the longitudinal length of the guide rail (160).

13. Guide system according to any of claims 8 to 12, **characterised in that** it has a transverse stop device (180), in particular a transverse stop body, which is or can be located at the lateral stop device (170) and has a transverse stop surface (182) oriented at an angle to the lateral stop surface (174) for the workpiece (W), wherein it is advantageously provided that that the transverse stop device (180) is guided at the lateral stop device (170) with respect to the longitudinal dimension (LE) thereof and/or is arranged to be releasably fixable using fixing means, in particular a clamping device.

14. Guide system according to any of the preceding claims, **characterised in that** the cutting tool (40) has a supporting part (41), which is or can be connected to the drive assembly (11) of the hand-operated power tool (10) using the connecting means and which has an oblong shape and extends along a longitudinal axis (L), wherein the cutting body (50) of the cutting tool (40) can be driven by the drive assembly (11) of the hand-operated power tool (10) and is mounted at a linear guide (60A) of the supporting part (41).

15. Guide system according to any of the preceding claims, **characterised in that** the cutting body (50) does not project in front of the guide carriage (120) on the side averted from the hand-operated power tool (10).

## Revendications

1. Système de guidage (110) comprenant un rail de guidage (160) pouvant être posé sur un support (U) et un chariot de guidage (120) prévu pour le guidage d'une machine-outil à main (10), dans lequel le rail de guidage (160) présente au moins un contour de guidage (166) s'étendant le long de son étendue longitudinale (LE) pour le guidage du chariot de guidage (120), dans lequel le chariot de guidage (120) forme un constituant de la machine-outil à main (10) ou peut être relié à l'aide de moyens de liaison à la machine-outil à main (10), dans lequel la machine-outil à main (10) présente un groupe d'entraînement (11) pour l'entraînement d'un outil de coupe (40) présentant au moins un corps de coupe (50) qui est prévu pour l'incision dans une pièce à usiner (W) le long d'un sens de travail (AR), **caractérisé en ce que** le système de guidage (110) présente un dispositif d'appui (35) pouvant être relié de manière amovible à l'aide de moyens de fixation (131) ou relié au chariot de guidage (120) pour l'appui du groupe d'entraînement (11) de la machine-outil à main (10) dans une distance prévue pour le placement de la pièce à usiner (W) sur le rail de guidage (160) par rapport au chariot de guidage (120) de sorte que l'outil de coupe (40) soit agencé dans la distance entre le rail de guidage (160) et le groupe d'entraînement (11) pour l'incision dans la pièce à usiner (W) reposant sur le rail de guidage (160).

2. Système de guidage (110) selon la revendication 1, **caractérisé en ce que** le dispositif d'appui (35) forme un constituant de l'outil de coupe (40) et/ou forme un guidage pour l'outil de coupe (40) et/ou est formé par l'outil de coupe (40).

3. Système de guidage selon la revendication 1 ou 2, **caractérisé en ce que** le dispositif d'appui (35) présente une partie d'appui (41) présentant une forme longitudinale pour l'appui du groupe d'entraînement (11) de la machine-outil à main (10) contre le chariot de guidage (120), dans lequel une première zone d'extrémité longitudinale (53) de la partie d'appui (41) présente les moyens de liaison pour la liaison avec le groupe d'entraînement (11) ou est reliée au groupe d'entraînement (11) et une seconde zone d'extrémité longitudinale (54) opposée à la première zone d'extrémité longitudinale de la partie d'appui (41) est reliée au chariot de guidage (120) ou peut être reliée à l'aide des moyens de fixation (131) de manière amovible à la partie d'appui (41), et dans lequel l'au moins un corps de coupe (50) de l'outil de coupe (40) est agencé, en particulier guidé, à côté de la partie d'appui (41) ou au niveau de la partie d'appui (41).

4. Système de guidage selon la revendication 3, **caractérisé en ce qu'**une largeur transversale de la partie d'appui (41) s'élève transversalement au sens de travail (AR) au maximum au double, en particulier au maximum à 1,5 fois, une largeur transversale du corps de coupe (50), et/ou que le chariot de guidage (120) est ou peut être relié l'un à l'autre avec une seule partie d'appui (41) et/ou que dans un sens de travail (AR) de la machine-outil à main (10), aucun espace intermédiaire n'est présent entre la partie d'appui (41) et le corps de coupe (50).

5. Système de guidage selon l'une quelconque des revendications précédentes, **caractérisé en ce que** les moyens de fixation (131) présentent pour la liaison amovible du dispositif d'appui (35) avec le chariot de guidage (120) un agencement de crochet (132) et/ou un agencement de verrou (133) et/ou un agencement de serrage (134) et/ou une genouillère et/ou un levier de serrage (146).

6. Système de guidage selon l'une quelconque des revendications précédentes, **caractérisé en ce que** le dispositif d'appui (35), en particulier une partie d'appui (41) du dispositif d'appui (35), présente une forme de type paroi ou de type lame.

7. Système de guidage selon l'une quelconque des revendications précédentes, **caractérisé en ce que** le chariot de guidage (120) présente une surface de côté supérieur (122) éloignée en position d'utilisation du rail de guidage (160) et l'au moins un corps de coupe (50) s'étend jusqu'à la surface de côté supérieur (122) ou vient en prise dans une cavité (130A) agencée au niveau de la surface de côté supérieur (122) et/ou que le chariot de guidage (120) présente un agencement de rouleau (128) pour le roulement sur le support (U) et/ou le rail de guidage (160) et/ou que le chariot de guidage (120) présente au moins un contour antagoniste de guidage (150), séparé en particulier d'un agencement de rouleau (128), en particulier une rainure de guidage, pour le guidage au niveau du contour de guidage (166) du rail de guidage (160) et/ou que le chariot de guidage (120) présente au niveau de son côté avant agencé en particulier dans le sens de travail (AR) devant l'outil de coupe (40), agencé dans le sens de travail (AR) de l'outil de coupe (40) à l'avant, un biais de glissement ou contour de glissement pour le glissement de la pièce à usiner (W) sur le rail de guidage (120).

8. Système de guidage selon l'une quelconque des revendications précédentes, **caractérisé en ce qu'**il comporte un dispositif de butée latérale (170) avec une surface de butée latérale (174) prévue pour l'appui latéral contre la pièce à usiner (W) et un dispositif de retenue (190) pour la liaison du dispositif de butée latérale (170) avec le rail de guidage (160) dans au moins une position angulaire par rapport au rail de guidage (160).

9. Système de guidage selon la revendication 8, **caractérisé en ce qu'**un évidement d'outil de coupe (173) et/ou un évidement de chariot de guidage (210) est agencé au niveau du dispositif de butée latérale (170) et/ou du dispositif de retenue (190), dans lequel l'outil de coupe (40) peut s'enfoncer dans l'évidement d'outil de coupe (173) ou le chariot de guidage (120) peut s'enfoncer dans l'évidement de chariot de guidage (210) lors d'un mouvement du chariot de guidage (120) le long du sens d'étendue (LE) du rail de guidage (160) en direction de la surface de butée latérale (174), et/ou que le dispositif de retenue (190) présente un chariot (191) qui est guidé au niveau du rail de guidage (160) dans son sens d'étendue longitudinale (LE), en particulier au niveau de l'au moins un contour de guidage (166).

10. Système de guidage selon la revendication 9, **caractérisé en ce que** le chariot (191) présente un dispositif de fixation, avec lequel le chariot (191) peut être fixé, en particulier peut être serré dans au moins deux positions longitudinales par rapport à l'étendue longitudinale (LE) du rail de guidage (160) au niveau du rail de guidage (160), et/ou que le chariot (160) est logé de manière pivotante au niveau du rail de guidage (160), en particulier pour le déplacement du dispositif de butée latérale (170) dans une position de transport (TS) s'alignant sur le rail de guidage (160) et/ou pour le réglage de la position angulaire du dispositif de butée latérale (170) par rapport au rail de guidage (160).

11. Système de guidage selon l'une quelconque des revendications 8 à 10, **caractérisé en ce que** le dispositif de retenue (190) présente un palier de pivotement (200A) de sorte que le dispositif de butée latérale (170) soit logé de manière pivotante au niveau du rail de guidage (160) autour d'un axe de pivotement perpendiculaire en particulier à l'étendue longitudinale (LE) du rail de guidage (160), dans lequel il est avantageusement prévu que le palier de pivotement (200A) soit agencé au niveau du chariot (191) guidé au niveau du rail de guidage (160).

12. Système de guidage selon l'une quelconque des revendications 8 à 11, **caractérisé en ce que** le dispositif de butée latérale (170) présente une forme longitudinale, en particulier est configuré en tant que réglette de guidage, et/ou qu'une longueur longitudinale du dispositif de butée latérale (170) correspond au moins à 50 %, de préférence au moins à 80 %, de la longueur longitudinale du rail de guidage (160).

13. Système de guidage selon l'une quelconque des revendications 8 à 12, **caractérisé en ce qu'**il présente un dispositif de butée transversale (180), en particulier un corps de butée transversale, agencé ou pouvant être agencé au niveau du dispositif de butée latérale (170), qui présente une surface de butée transversale (182) angulaire par rapport à la surface de butée latérale (174) pour la pièce à usiner (W), dans lequel il est avantageusement prévu que le dispositif de butée transversale (180) soit guidé au niveau du dispositif de butée latérale (170) par rapport à son étendue longitudinale (LE) et/ou soit agencé de manière fixable et amovible à l'aide de moyens de fixation, en particulier d'un dispositif de serrage.

14. Système de guidage selon l'une quelconque des revendications précédentes, **caractérisé en ce que** l'outil de coupe (40) présente une partie d'appui (41) reliée ou pouvant être reliée au groupe d'entraînement (11) de la machine-outil à main (10) à l'aide des moyens de liaison, qui présente une forme longitudinale et s'étend le long d'un axe longitudinal (L), dans lequel le corps de coupe (50) de l'outil de coupe (40) peut être entraîné par le groupe d'entraînement (11) de la machine-outil à main (10) et est logé au niveau d'un guidage linéaire (60A) de la partie d'appui (41).

15. Système de guidage selon l'une quelconque des revendications précédentes, **caractérisé en ce que** le corps de coupe (50) ne dépasse pas du chariot de guidage (120) au niveau de son côté éloigné de la machine-outil à main (10).
